# EUROPÄISCHE PATENTSCHRIFT

(11) **EP 2 268 702 B1**
(45) Veröffentlichungstag und Bekanntmachung des Hinweises auf die Patenterteilung: **14.11.2012**
(21) Anmeldenummer: 09733143.3
(22) Anmeldetag: 07.04.2009
(51) Int. Cl.: C08G 63/16, C08G 63/20, C08G 63/78

(54) **VERFAHREN ZUR KONTINUIERLICHEN HERSTELLUNG VON BIOLOGISCH ABBAUBAREN POLYESTERN**
METHOD FOR THE CONTINUOUS PRODUCTION OF BIODEGRADABLE POLYESTERS
PROCÉDÉ DE PRODUCTION EN CONTINU DE POLYESTERS BIODÉGRADABLES

(30) Priorität: 15.04.2008 EP 08154541
(43) Veröffentlichungstag der Anmeldung: 05.01.2011
(73) Patentinhaber: BASF SE, 67056 Ludwigshafen (DE)
(72) Erfinder: WITT, Uwe, 67112 Mutterstadt (DE); YAMAMOTO, Motonori, 68199 Mannheim (DE)
(86) Internationale Anmeldenummer: PCT/EP2009/054116
(87) Internationale Veröffentlichungsnummer: WO 2009/127556

(56) Entgegenhaltungen:
- DE-A1- 19 929 790
- DE-A1-102005 053 068

## Beschreibung

Die vorliegende Erfindung betrifft ein Verfahren zur kontinuierlichen Herstellung eines biologisch abbaubaren Polyesters auf Basis von aliphatischen oder aliphatischen und aromatischen Dicarbonsäuren und aliphatischen Dihydroxyverbindungen, wobei

eine Mischung aus den aliphatischen Dyhydroxyverbindungen, den aliphatischen und aromatischen Dicarbonsäuren und gegebenenfalls weiteren Comonomeren (Komponente C), ohne Zugabe eines Katalysators, zu einer Paste vermischt werden oder alternativ die flüssigen Ester der Dicarbonsäuren und die Dihydroxyverbindung und gegebenenfalls weiteren Comonomeren, ohne Zugabe eines Katalysators, eingespeist werden und
i) in eine ersten Stufe diese Mischung zusammen mit der Gesamtmenge oder einer Teilmenge des Katalysators kontinuierlich verestert bzw. umgeestert wird;
ii) in einer zweiten Stufe gegebenenfalls mit der Restmenge Katalysator kontinuierlich das gemäß i) erhaltene Umesterungs- bzw. Veresterungsprodukt bis zu einer Viskositätszahl nach DIN 53728 von 20 bis 70 cm³/g vorkondensiert wird;
iii) in einer dritten Stufe kontinuierlich das aus ii) erhältliche Produkt bis zu einer Viskositätszahl nach DIN 53728 von 60 bis 170 cm³/g polykondensiert wird und
iv) in einer vierten Stufe kontinuierlich das aus iii) erhältliche Produkt bis zu einer Viskositätszahl nach DIN 53728 von 150 bis 320 cm³/g in einer Polyadditionsreaktion mit einem Kettenverlängerer D umgesetzt wird.

Insbesondere betrifft die Erfindung ein Verfahren zur kontinuierlichen Herstellung eines biologisch abbaubaren Polyesters auf Basis von aliphatischen und aromatischen Dicarbonsäuren und aliphatischen Dihydroxyverbindungen, wobei

eine Mischung aus den aliphatischen Dyhydroxyverbindungen, den aliphatischen und aromatischen Dicarbonsäuren und gegebenenfalls weiteren Comonomeren (Komponente C), ohne Zugabe eines Katalysators, zu einer Paste vermischt werden oder alternativ die flüssigen Ester der Dicarbonsäuren und die Dihydroxyverbindung und gegebenenfalls weiteren Comonomeren, ohne Zugabe eines Katalysators, eingespeist werden und
i) in eine ersten Stufe diese Mischung zusammen mit der Gesamtmenge oder
einer Teilmenge des Katalysators kontinuierlich verestert bzw. umgeestert wird; ii) in einer zweiten Stufe gegebenenfalls mit der Restmenge Katalysator kontinuierlich das gemäß i) erhaltene Umesterungs- bzw. Veresterungsprodukt bis zu einer Viskositätszahl nach DIN 53728 von 20 bis 60 cm³/g vorkondensiert wird;
iii) in einer dritten Stufe kontinuierlich das aus ii) erhältliche Produkt bis zu einer Viskositätszahl nach DIN 53728 von 70 bis 130 cm³/g polykondensiert wird und
iv) in einer vierten Stufe kontinuierlich das aus iii) erhältliche Produkt bis zu einer Viskositätszahl nach DIN 53728 von 160 bis 250 cm³/g in einer Polyadditionsreaktion mit einem Kettenverlängerer D umgesetzt wird.

Des Weiteren betrifft die Erfindung biologisch abbaubare Polyester, die mit diesem Verfahren erstmals zugänglich sind.

Im Stand der Technik sind zur Herstellung von biologisch abbaubaren Polyestern auf Basis von aliphatischen und aromatischen Dicarbonsäuren und aliphatischen Dihydroxyverbindungen insbesondere diskontinuierliche (Batch)-Verfahren beschrieben (WO-A 92/09654 und WO-A 96/15173). Diese haben den Nachteil, dass der aliphatisch/aromatische Polyester relativ lange im Reaktionskessel unter hohen Temperaturen verweilen muss, um ein hohes Molekulargewicht aufzubauen - die gewünschte Viskositätszahl nach DIN 53728 liegt bei größer 160 cm³/g. Aufgrund der langen Verweilzeiten bei hohen Temperaturen, werden die empfindlichen aliphatisch/aroma-tischen Polyester zum Teil wieder abgebaut. Die Säurezahl der Polyester steigt rapide an und kann leicht Werte von größer 1,6 mg KOH/g erreichen. Hohe Säurezahlen führen bei der anschließenden Kettenverlängerung (insbes. mit Isocyanaten) zu Problemen. Höhere Molekulargewichte lassen sich dann nicht mehr aufbauen. Derartige Materialien erreichen lediglich niedrige Viskositäten, weisen häufig Stippen auf und sind für zahlreiche Spritzguss- oder Extrusionsanwendungen nicht mehr zu gebrauchen. Schließlich weisen biologisch abbaubare Polyester mit hoher Säurezahl eine sehr beschränkte Hydrolysestabilität auf.

Aus der Literatur sind effiziente, kontinuierliche Verfahren zur Herstellung von aromatischen Polyestern wie PET und PBT beschrieben (siehe beispielsweise WO 03/042278 und DE-A 199 29 790). Diese lassen sich jedoch nicht unmittelbar auf aliphatisch/aromatische Polyester übertragen. Zum einen weisen die aromatischen Polyester häufig höhere Säurezahlen auf und zum anderen ist das Problem der Hydrolyseinstabilität bei aromatischen Polyestern nicht so ausgeprägt wie bei aliphatisch/aromatischen Polyestern.

Aufgabe der vorliegenden Erfindung war es demnach ein großtechnisches Verfahren bereitzustellen, das die Herstellung von biologisch abbaubaren aliphatischen oder aliphatisch/aromatischen (teilaromatischen) Polyestern mit Viskositäten nach DIN 53728 von 150 bis 320 und Säurezahlen nach DIN EN 12634 von kleiner 1,2 mg KOH/g, vorzugsweise kleiner 1,0 mg KOH/g ermöglicht. Für ein großtechnisches Verfahren sind weiterhin die Prozessfähigkeit und die Wirtschaftlichkeit (Produktausbeute und Raum/Zeit-Ausbeute) von großer Bedeutung.

Überraschenderweise löst das eingangs erwähnte kontinuierliche, 4-Stufige Verfahren die Aufgabe in jeder Hinsicht.

Weiterhin gelingt es mit einer bevorzugten Ausführungsform des erfindungsgemäßen Verfahrens (siehe Anspruch 6, 17, 18) erstmals biologisch abbaubare teilaromatische Polyester mit Viskositätszahlen von größer 160 cm³/g und Säurezahlen von kleiner 1,0 mg KOH/g und einer MVR kleiner 6,0 cm³/10 min (gemessen bei 190°C, 216 kg Gewicht) (siehe Anspruch 19) bereitzustellen. Diese sind wesentlich hydrolysestabiler als biologisch abbaubare Polyester wie sie beispielsweise in der WO-A 96/15173 beschrieben sind. Die Polyester lassen sich damit einfacher verarbeiten. Weiterhin öffnen sich damit neue Anwendungsfenster unter anderem auch in Mischungen mit anderen hydrolyselabilen Biopolymeren wie beispielsweise PLA (Polylactid); PHA (Polyhydroxyalkanoate), PBS (Polybutylensuccinat) und Stärke.

Unter biologisch abbaubaren Polyestern werden aliphatische und teilaromatische Polyester verstanden - wie sie beispielsweise in der WO-A 96/15173 und DE-A 10 2005053068 beschrieben sind.

Insbesondere werden unter biologisch abbaubaren Polyestern aliphatisch/aromatische Polyester verstanden, die wie folgt aufgebaut sind:
A) einer Säurekomponente aus
   a1) 30 bis 99 mol-% mindestens einer aliphatischen Dicarbonsäure oder deren Ester oder Mischungen davon
   a2) 1 bis 70 mol-% mindestens einer aromatischen Dicarbonsäure oder deren Ester oder Mischungen davon und
   a3) 0 bis 5 mol-% einer sulfonatgruppenhaltigen Verbindung,
   wobei die Molprozente der Komponenten a1) bis a3) zusammen 100% ergeben und
B) einer Diolkomponente aus, und
   b1) mindestens äquimolare Mengen zur Komponente A eines C₂-bis C₁₂-Alkandiol oder Mischungen davon und
   b2) 0 bis 2 Gew.-% bezogen auf die Polyestermenge nach Stufe iii (entspricht der eingesetzten Menge der Komponenten A und B abzüglich der abgetrennten Reaktionsdämpfe) einer mindestens 3 funktionelle Gruppen enthaltenden Verbindung,
   und gegebenenfalls darüber hinaus eine oder mehrere Komponenten ausgewählt aus
C) einer Komponente ausgewählt aus
   c1) mindestens einer Etherfunktionen enthaltenden Dihydroxyverbindung der Formel I

      HO-[(CH₂)ₙ-O]ₘ-H (I)

      in der n für 2, 3 oder 4 und m für eine ganze Zahl von 2 bis 250 stehen,
   c2) mindestens einer Hydroxycarbonsäure der Formel IIa oder IIb 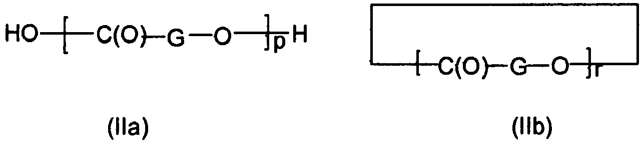 in der p eine ganze Zahl von 1 bis 1500 und r eine ganze Zahl von 1 bis 4 bedeuten, und G für einen Rest steht, der ausgewählt ist aus der Gruppe bestehend aus Phenylen, -(CH₂)_{q}-, wobei q eine ganze Zahl von 1 bis 5 bedeutet, -C(R)H- und -C(R)HCH₂, wobei R für Methyl oder Ethyl steht
   c3) mindestens einem Amino-C₂- bis C₁₂-alkanol oder mindestens einem Amino-C₅-bis C₁₀-cycloalkanol oder Mischungen davon
   c4) mindestens einem Diamino-C₁- bis C₈-Alkan
   c5) mindestens einer Aminocarbonsäureverbindung ausgewählt aus der Gruppe, bestehend aus Caprolactam, 1,6 Aminocapronsäure, Laurinlactam, 1,12-Aminolaurinsäure und 1,11-Aminoundecansäure
   oder Mischungen aus c1) bis c5)
   und
D) 0,01 bis 4 Gew.-% bezogen auf die Polyestermenge nach Stufe iii mindestens einer Komponente ausgewählt aus der Gruppe d1) bis d4)
   d1) eines di- oder oligofunktionellen Isoscyanats und/oder Isocyanurat,
   d2) eines di- oder oligofunktionellen Peroxids,
   d3) eines di- oder oligofunktionellen Epoxids,
   d4) eines di- oder oligofunktionellen Oxazolins, Oxazins, Caprolactams und/oder Carbodiimids;
E) 0 bis 15 Gew.-% bezogen auf die Polyestermenge nach Stufe iii einer Komponente ausgewählt aus der Gruppe e1) bis e3)
   e1) eines Gleitmittels wie Erucasäureamid oder ein Stearat,
   e2) eines Nukleierungsmittels wie Calciumcarbonat, Polyethylenterephthalats oder Polybutylenterephthalats,
   e3) eines aliphatischen Polyesters ausgewählt aus der Gruppe bestehend aus: Polymilchsäure, Polycaprolacton, Polyhydroxyalkanoat.

Die Säurekomponente A der teilaromatischen Polyester enthält in einer bevorzugten Ausführungsform von 30 bis 70, insbesondere von 40 bis 60 mol-% a1 und von 30 bis 70, insbesondere von 40 bis 60 mol-% a2. In einer besonders bevorzugten Ausführungsform enthält die Säurekomponente A der teilaromatischen Polyester mehr als 50 mol.-% an aliphatischer Dicarbonsäure a1). Derartige Polyester zeichnen sich durch ein exzellentes biologisches Abbauverhalten aus.

Als aliphatische Säuren und die entsprechenden Derivate a1 kommen im Allgemeinen solche mit 2 bis 40 Kohlenstoffatomen, vorzugsweise 4 bis 14 Kohlenstoffatomen, in Betracht. Sie können sowohl linear als auch verzweigt sein. Die im Rahmen der vorliegenden Erfindung verwendbaren cycloaliphatischen Dicarbonsäuren sind in der Regel solche mit 7 bis 10 Kohlenstoffatomen und insbesondere solche mit 8 Kohlenstoffatomen. Prinzipiell können jedoch auch Dicarbonsäuren mit einer größeren Anzahl an Kohlenstoffatomen, beispielsweise mit bis zu 30 Kohlenstoffatomen, eingesetzt werden.

Beispielhaft zu nennen sind: Malonsäure, Bernsteinsäure, Glutarsäure, 2-Methylglutarsäure, 3-Methylglutarsäure, Adipinsäure, Pimelinsäure, Korksäure, Azelainsäure, Sebacinsäure, Undecandisäure, Dodecandisäure, Brassylsäure, Tetradecandisäure, Fumarsäure, 2,2-Dimethylglutarsäure, Suberinsäure, Dimerfettsäure (wie z.B. Empol® 1061 der Fa. Cognis) 1,3-Cyclopentandicarbonsäure, 1,4-Cyclohexandicarbonsäure, 1,3-Cyclohexandicarbonsäure, Diglykolsäure, Itaconsäure, Maleinsäure, Maleinsäureanhydrid und 2,5-Norbomandicarbonsäure.

Als esterbildende Derivate der oben genannten aliphatischen oder cycloaliphatischen Dicarbonsäuren, die ebenso verwendbar sind, sind insbesondere die Di-C₁- bis C₆-Alkylester, wie Dimethyl-, Diethyl-, Di-n-propyl, Di-isopropyl, Di-n-butyl, Di-iso-butyl, Di-t-butyl, Di-n-pentyl-, Di-iso-pentyl oder Di-n-hexylester zu nennen. Anhydride der Dicarbonsäuren können ebenfalls eingesetzt werden.

Dabei können die Dicarbonsäuren oder deren esterbildenden Derivate, einzeln oder als Gemisch aus zwei oder mehr davon eingesetzt werden.

Bevorzugt werden Bernsteinsäure, Adipinsäure, Azelainsäure, Sebacinsaüre, Brassylsäure oder deren jeweilige esterbildenden Derivate oder Mischungen davon eingesetzt. Besonders bevorzugt wird Bernsteinsäure, Adipinsäure oder Sebacinsäure oder deren jeweilige esterbildenden Derivate oder Mischungen davon eingesetzt. Besonders bevorzugt wird Adipinsäure oder deren esterbildende Derivate, wie deren Alkylester oder deren Mischungen eingesetzt. Als aliphatische Dicarbonsäure werden Sebacinsäure oder Mischungen von Sebacinsäure mit Adipinsäure bevorzugt eingesetzt, wenn Polymermischungen mit "harten" bzw. "spröden" Komponenten ii) wie beispielsweise Polyhydroxybutyrat oder insbesondere Polylactid hergestellt werden. Als aliphatische Dicarbonsäure werden Bernsteinsäure oder Mischungen von Bernsteinsäure mit Adipinsäure bevorzugt eingesetzt, wenn Polymermischungen mit "weichen" bzw. "zähen" Komponenten ii) wie beispielsweise Polyhydroxybuyratcovaleriat oder Poly-3-hydroxybuyrat-co-4-hydroxybutyrat hergestellt werden.

Bernsteinsäure, Azelainsäure, Sebacinsäure und Brassylsäure haben zudem den Vorteil dass sie als nachwachsende Rohstoffe zugänglich sind.

Als aromatische Dicarbonsäure a2 sind im Allgemeinen solche mit 8 bis 12 Kohlenstoffatomen und vorzugsweise solche mit 8 Kohlenstoffatomen zu nennen. Beispielhaft erwähnt seien Terephthalsäure, Isophthalsäure, 2,6-Naphthoesäure und 1,5-Naphthoesäure sowie esterbildende Derivate davon. Dabei sind insbesondere die Di-C₁-C₆-Alkylester, z.B. Dimethyl-, Diethyl-, Di-n-propyl-, Di-iso-propyl, Di-n-butyl-, Di-iso-butyl, Di-t-butyl, Di-n-pentyl-, Di-iso-pentyl oder Di-n-hexylester zu nennen. Die Anhydride der Dicarbonsäuren a2 sind ebenso geeignete esterbildende Derivate.

Prinzipiell können jedoch auch aromatische Dicarbonsäuren a2 mit einer größeren Anzahl an Kohlenstoffatomen, beispielsweise bis zu 20 Kohlenstoffatomen, eingesetzt werden.

Die aromatischen Dicarbonsäuren oder deren esterbildende Derivate a2 können einzeln oder als Gemisch aus zwei oder mehr davon eingesetzt werden. Besonders bevorzugt wird Terephthalsäure oder deren esterbildende Derivate wie Dimethylterephthalat, verwendet.

Als sulfonatgruppenhaltige Verbindung setzt man üblicherweise ein Alkali- oder Erdalkalimetallsalz einer sulfonatgruppenhaltigen Dicarbonsäure oder deren esterbildende Derivate ein, bevorzugt Alkalimetallsalze der 5-Sulphoisophthalsäure oder deren Mischungen, besonders bevorzugt das Natriumsalz.

Nach einer der bevorzugten Ausführungsformen enthält die Säurekomponente A von 40 bis 60 mol-% a1, von 40 bis 60 mol-% a2 und von 0 bis 2 mol-% a3.

Im Allgemeinen werden die Diole B unter verzweigten oder linearen Alkandiolen mit 2 bis 12 Kohlenstoffatomen, bevorzugt 4 bis 6 Kohlenstoffatomen ausgewählt.

Beispiele geeigneter Alkandiole sind Ethylenglykol, 1,2-Propandiol, 1,3-Propandiol, 1,2-Butandiol, 1,4-Butandiol, 1,5-Pentandiol, 1,6-Hexandiol, 2,4-Dimethyl-2-ethylhexan-1,3-diol, 2,2-Dimethyl-1,3-propandiol, 2-Ethyl-2-butyl-1,3-propandiol, 2-Ethyl-2-isobutyl-1,3-propandiol, 2,2,4-Trimethyl-1,6-hexandiol, insbesondere Ethylenglykol, 1,3-Propandiol, 1,4-Butandiol und 2,2-Dimethyl- 1,3-propandiol (Neopentylglykol); Cyclopentandiol, 1,4-Cyclohexandiol, 1,2-Cyclohexandimethanol, 1,3-Cyclohexandimethanol, 1,4-Cyclohexandimethanol oder 2,2,4,4-Tetramethyl-1,3-cyclobutandiol. Besonders bevorzugt sind 1,4-Butandiol, insbesondere in Kombination mit Adipinsäure als Komponente a1) und 1,3- Propandiol, insbesondere in Kombination mit Sebacinsäure als Komponente a1). 1,3- Propandiol hat zudem den Vorteil, dass es als nachwachsender Rohstoff zugänglich ist. Es können auch Mischungen unterschiedlicher Alkandiole verwendet werden.

In der Regel wird in den Verfahrensstufen i) und ii) ein Verhältnis von Komponente b1 (Diol) zu Disäuren A von 1,5 bis 2,5 und vorzugsweise 1,8 bis 2,2 eingestellt.

Die Verbindungen b2) enthalten bevorzugt mindestens drei funktionelle Gruppen enthaltende Vernetzer. Besonders bevorzugte Verbindungen haben drei bis sechs Hydroxylgruppen. Beispielhaft seien genannt: Weinsäure, Zitronensäure, Äpfelsäure; Trimethylolpropan, Trimethylolethan; Pentaerythrit; Polyethertriole und Glycerin, Trimesinsäure, Trimellitsäure, Trimellitsäureanhydrid, Pyromellitsäure und Pyromellitsäuredianhydrid. Bevorzugt sind Polyole wie Trimethylolpropan, Pentaerythrit und insbesondere Glycerin. Die Verbindungen b2 können als Verzweiger oder auch Vernetzer wirken. Mittels der Komponenten b2 lassen sich biologisch abbaubare Polyester mit einer strukturellen Viskosität aufbauen. Das rheologische Verhalten der Schmelzen verbessert sich; die biologisch abbaubaren Polyester lassen sich leichter verarbeiten, beispielsweise besser durch Schmelzeverfestigung zu Folien ausziehen. Die Verbindungen b2 wirken scherentzähend, d.h. die Viskosität unter Belastung wird geringer.

Die Verbindungen b2 werden vorzugsweise in Mengen von 0,01 bis 2, bevorzugt 0,05 bis 1, besonders bevorzugt 0,08 bis 0,20 Gew.-%, bezogen auf die Polymermenge nach Stufe iii) eingesetzt.

Neben den Komponenten A und B können die Polyester, auf denen die erfindungsgemäßen Polyestermischungen basieren, weitere Komponenten enthalten.

Als Dihydroxyverbindungen c1 eignen sich Diethylenglykol, Triethylenglykol, Polyethylenglykol, Polypropylenglykol und Polytetrahydrofuran (Poly-THF), besonders bevorzugt Diethylenglykol, Triethylenglykol und Polyethylenglykol, ein, wobei man auch Mischungen davon oder Verbindungen, die unterschiedliche Variablen n aufweisen (siehe Formel I), beispielsweise Polyethylenglykol, das Propyleneinheiten (n = 3) enthält, beispielsweise erhältlich durch Polymerisation nach an sich bekannten Methoden von zuerst Ethylenoxid und anschließend mit Propylenoxid, besonders bevorzugt ein Polymer auf Basis von Polyethylenglykol, mit unterschiedlichen Variablen n, wobei Einheiten gebildet aus Ethylenoxid überwiegen. Das Molekulargewicht (Mₙ) des Polyethylenglykols wählt man in der Regel im Bereich von 250 bis 8000, bevorzugt von 600 bis 3000 g/mol.

Nach einer der bevorzugten Ausführungsformen können beispielsweise von 15 bis 98, bevorzugt 60 bis 99,5 mol-% der Diole B und 0,2 bis 85, bevorzugt 0,5 bis 30 mol-% der Dihydroxyverbindungen c1, bezogen auf die molare Menge von B und c1, für die Herstellung der teilaromatischen Polyester verwendet werden.

Zur Herstellung von Copolyestern kann Hydroxycarbonsäure c2) eingesetzt werden: Glykolsäure, D-, L-, D,L-Milchsäure, 6-Hydroxyhexansäure, deren cyclische Derivate wie Glycolid (1,4-Dioxan-2,5-dion), D-, L-Dilactid (3,6-dimethyl-1,4-dioxan-2,5-dion), p-Hydroxybenzoesäure sowie deren Oligomere und Polymere wie 3-Polyhydroxybuttersäure, Polyhydroxyvaleriansäure, Polylactid (beispielsweise als NatureWorks® (Fa. Cargill) erhältlich) sowie eine Mischung aus 3-Polyhydroxybuttersäure und Polyhydroxy-valeriansäure (letzteres ist unter dem Namen Biopol® von Zeneca erhältlich), besonders bevorzugt für die Herstellung von teilaromatischen Polyestern sind die niedermolekularen und cyclischen Derivate davon.

Die Hydroxycarbonsäuren können beispielsweise in Mengen von 0,01 bis 50, bevorzugt von 0,1 bis 40 Gew.-% bezogen auf die Menge an A und B verwendet werden.

Als Amino-C₂-C₁₂-alkanol oder Amino-C₅-C₁₀-cyloalkanol (Komponente c3), wobei hierunter auch 4-Aminomethylcyclohexanmethanol fallen soll, setzt man bevorzugt Amino-C₂-C₆-alkanole wie 2-Aminoethanol, 3-Aminopropanol, 4-Aminobutanol, 5-Aminopentanol, 6-Aminohexanol sowie Amino-C₅-C₆-cyloalkanole wie Aminocyclopentanol und Aminocyclohexanol oder Mischungen davon ein.

Als Diamino-C₁-C₈-alkan (Komponente c4) setzt man bevorzugt Diamino-C₄-C₆-alkane ein wie 1,4-Diminobutan, 1,5-Diaminopentan und 1,6-Diaminohexan (Hexamethylendiamin, "HMD").

Nach einer bevorzugten Ausführungsform kann von 0,5 bis 99,5 mol-%, bevorzugt 0,5 bis 50 mol-%, c3, bezogen auf die Molmenge von B, und von 0 bis 50, bevorzugt von 0 bis 35 mol-%, c4, bezogen auf die Molmenge von B, für die Herstellung der teilaromatischen Polyester eingesetzt werden.

Als Komponente c5 können Aminocarbonsäuren ausgewählt aus der Gruppe, bestehend aus Caprolactam, 1,6 Aminocapronsäure, Laurinlactam, 1,12-Aminolaurinsäure und 1,11-Aminoundecansäure verwendet werden.

Im Allgemeinen wird c5 in Mengen von 0 bis 20, bevorzugt von 0,1 bis 10 Gew.-%, bezogen auf die Gesamtmenge der Komponenten A und B, eingesetzt.

Als Komponente d1 werden ein Isocyanat oder eine Mischung unterschiedlicher Isocyanate eingesetzt. Es können aromatische oder aliphatische Diisocyanate eingesetzt werden. Es können aber auch höher funktionelle Isocyanate verwendet werden.

Unter einem aromatischen Diisocyanat d1 werden im Rahmen der vorliegenden Erfindung vor allem Toluylen-2,4-diisocyanat, Toluylen-2,6-diisocyanat, 2,2'-Diphenylmethandiisocyanat, 2,4'-Diphenylmethandiisocyanat, 4,4'-Diphenylmethandiisocyanat, Naphthylen-1,5-diisocyanat oder Xylylen-diisocyanat verstanden.

Darunter werden 2,2'-, 2,4'- sowie 4,4'-Diphenylmethandiisocyanat als Komponente d1 besonders bevorzugt. Im Allgemeinen werden letztere Diisocyanate als Mischung eingesetzt.

Als dreikerniges Isocyanat d1 kommt auch Tri(4-isocyanophenyl)methan in Betracht. Die mehrkernigen aromatischen Diisocyanate fallen beispielsweise bei der Herstellung von ein- oder zweikernigen Diisocyanaten an.

In untergeordneten Mengen, z.B. bis zu 5 Gew.-%, bezogen auf das Gesamtgewicht der Komponente d1, kann die Komponente d1 auch Urethiongruppen, beispielsweise zum Verkappen der Isocyanatgruppen, enthalten.

Unter einem aliphatischen Diisocyanat d1 werden im Rahmen der vorliegenden Erfindung vor allem lineare oder verzweigte Alkylendiisocyanate oder Cycloalkylendiisocyanate mit 2 bis 20 Kohlenstoffatomen, bevorzugt 3 bis 12 Kohlenstoffatomen, z.B. 1,6-Hexamethylendiisocyanat, Isophorondiisocyanat oder Methylen-bis(4-isocyanatocyclohexan), verstanden. Besonders bevorzugte aliphatische Diisocyanate d1 sind Isophorondiisocyanat und insbesondere 1,6-Hexamethylendiisocyanat.

Zu den bevorzugten Isocyanuraten zählen die aliphatischen Isocyanurate, die sich von Alkylendiisocyanaten oder Cycloalkylendiisocyanaten mit 2 bis 20 Kohlenstoffatomen, bevorzugt 3 bis 12 Kohlenstoffatomen, z.B. Isophorondiisocyanat oder Methylen-bis(4-isocyanatocyclohexan), ableiten. Dabei können die Alkylendiisocyanate sowohl linear als auch verzweigt sein. Besonders bevorzugt werden Isocyanurate, die auf n-Hexamethylendiisocyanat basieren, beispielsweise cyclische Trimere, Pentamere oder höhere Oligomere des 1,6-Hexamethylendiisocyanats.

Im Allgemeinen wird die Komponente d1 in Mengen von 0,01 bis 4, bevorzugt 0,05 bis 2 -, besonders bevorzugt 0,2 bis 1,2 Gew.-% bezogen auf die Polymermenge nach Stufe iii) eingesetzt.

Als di- oder oligofunktionellen Peroxide (Komponente d2) sind beispielsweise die folgenden Verbindungen geeignet: Benzoylperoxid, 1,1-Bis(t.-butylperoxy)-3,3,5-trimethylcyclohexan, 1,1-Bis(t.-butylperoxy)methylcyclododecan, n-Butyl-4,4-bis(butylperoxy)valerat, Dicumylperoxid, t.-Butylperoxybenzoat, Dibutylperoxid, α,α-Bis(t.-butylperoxy)diisopropylbenzol, 2,5-Dimethyl-2,5-di(t.-butylperoxy)hexan, 2,5-Dimethyl-2,5-di(t.-butylperoxy)hexin-3 und t.-Butylperoxycumen.

Die Komponente d2 wird in 0,01 bis 4 Gew.-%, bevorzugt in 0,1 bis 2 Gew.-%, und besonders bevorzugt in 0,2 bis 1 Gew.-%, bezogen auf das Biopolymer eingesetzt.

Als Komponente d3 kommen difunktionelle oder oligofunktionelle Epoxide in Frage wie: Hydrochinon, Diglycidylether, Resorcindiglycidylether, 1,6-Hexandiol-diglycidylether und hydrierter Bisphenol-A-Diglycidylether. Andere Beispiele von Epoxiden umfassen Diglycidylterephthalat, Diglycidyltetrahydrophthalat, Diglycidylhexahydrophthalat, Dimethyldiglycidylphthalat, Phenylendiglycidylether, Ethylendiglycidylether, Trimethylendiglycidylether, Tetramethylendiglycidylether, Hexamethylendiglycidylether, Sorbitoldiglycidylether, Polyglycerin-polyglycidylether, Pentaerythrit-polyglycidylether, Diglycerin-polyglycidylether, Glycerin-polyglycidylether, Trimethylolpropan-polyglycidylether, Resorcin-diglycidylether, Neopentylglycol-diglycidylether, Ethylenglycol-diglycidylether, Diethylenglycol-diglycidylether, Polyethylenglycol-diglycidylether, Propylenglycoldiglycidylether, Dipropylenglycol-diglycidylether, Polypropylenglycol-diglycidylether und Polybutylenglycol-diglycidylether.

Als Komponente d3a ist insbesondere geeignet ein Epoxidgruppen-haltiges Copolymer auf Basis Styrol, Acrylsäureester und/oder Methacrylsäureester d3a. Die Epoxidgruppen tragenden Einheiten sind vorzugsweise Glycidyl(meth)acrylate. Als vorteilhaft haben sich Copolymere mit einem Glycidylmethacrylat-Anteil von größer 20, besonders bevorzugt von größer 30 und insbesondere bevorzugt von größer 50 Gew.-% des Copolymers erwiesen. Das Epoxid-Äquivalentgewicht (EEW) in diesen Polymeren beträgt vorzugsweise 150 bis 3000 und insbesondere bevorzugt 200 bis 500 g/Äquivalent. Das mittlere Molekulargewicht (Gewichtsmittel) Mwder Polymere beträgt vorzugsweise 2000 bis 25.000, insbesondere 3000 bis 8.000. Das mittlere Molekulargewicht (Zahlenmittel) Mₙ der Polymere beträgt vorzugsweise 400 bis 6.000, insbesondere 1000 bis 4.000. Die Polydispersität (Q) liegt im Allgemeinen zwischen 1.5 und 5. Epoxidgruppen-haltige Copolymere des obengenannten Typs werden beispielsweise von der BASF Resins B.V. unter der Marke Joncryl® ADR vertrieben. Als Kettenverlängerer besonders geeignet sind Joncryl® ADR 4368, langkettige Acrylate wie in der EP Anm. Nr. 08166596.0 beschrieben und Cardura®E10 der Fa. Shell.

Die Komponente d3 wird in 0,01 bis 4 Gew.-%, bevorzugt in 0,1 bis 2 Gew.-%, und besonders bevorzugt in 0,2 bis 1 Gew.-%, bezogen auf das Biopolymer eingesetzt. Die Komponente d3 kann auch als Säurefänger eingesetzt werden. Vorzugsweise wird d3 in dieser Ausführungsform in einer Konzentration von 0,01 bis 0,5 Gew.-% (Schritt iva) eingesetzt und anschließend wird eine Kettenverlängerung mit der Komponente d1,d2 und/oder d3a (Schritt ivb), die in einer Konzentration von vorzugsweise 0,2 bis 1,2 Gew.-% zugesetzt werden, durchgeführt.

Als Komponente d4 kommen di oder oligofunktionelle Oxazoline, Oxazine, Caprolactame und/oder Carbodiimide in Betracht.

Bisoxazoline sind im Allgemeinen erhältlich durch das Verfahren aus Angew. Chem. Int. Ed., Vol. 11 (1972), S. 287-288. Besonders bevorzugte Bisoxazoline und Bisoxazine sind solche, in denen das Brückenglied eine Einfachbindung, eine (CH₂)_{z}-Alkylengruppe, mit z = 2,3 oder 4 wie Methylen, Ethan-1,2-diyl, Propan-1,3-diyl, Propan-1,2-diyl, oder eine Phenylengruppe bedeutet. Als besonders bevorzugte Bisoxazoline seien 2,2'-Bis(2-oxazolin), Bis(2-oxazolinyl)methan, 1,2-Bis(2-oxazolinyl)ethan, 1,3-Bis(2-oxazolinyl)propan oder 1,4-Bis(2-oxazolinyl)butan, insbesondere 1,4-Bis(2-oxazolinyl)benzol, 1,2-Bis(2-oxazolinyl)benzol oder 1,3-Bis(2-oxazolinyl)benzol genannt. Weitere Beispiele sind: 2,2'-Bis(2-oxazolin, 2,2'-Bis(4-methyl-2-oxazolin), 2,2'-Bis(4,4'-dimethyl-2-oxazolin), 2,2'-Bis(4-ethyl-2-oxazolin), 2,2'-Bis(4,4'-diethyl-2-oxazolin), 2,2'-Bis(4-propyl-2-oxazolin), 2,2'-Bis(4-butyl-2-oxazolin), 2,2'-Bis(4-hexyl-2-oxazolin), 2,2'-Bis(4-phenyl-2-oxazolin), 2,2'-Bis(4-cyclohexyl-2-oxazolin), 2,2'-Bis(4-benzyl-2-oxazolin), 2,2'-p-Phenylen-bis(4-methyl-2-oxazolin), 2,2'-p-Phenylen-bis(4,4'dimethyl-2-oxazolin), 2,2'-m-Phenylen-bis(4-methyl-2-oxazolin), 2,2'-m-Phenylen-bis(4,4'-dimethyl-2-oxazolin), 2,2'-Hexamethylen-bis(2-oxazolin), 2,2'-Octamethylen-bis(2-oxazolin), 2,2'-Decamethylen-bis(2-oxazolin), 2,2'-Ethylenbis(4-methyl-2-oxazolin), 2,2'-Tetramethylen-bis(4,4'dimethyl-2-oxazolin), 2,2'-9,9'-Diphenoxyethan-bis(2-oxazolin), 2,2'-Cyclohexylen-bis(2-oxazolin) und 2,2'-Diphenylen-bis(2-oxazolin).

Bevorzugte Bisoxazine sind 2,2'-Bis(2-oxazin), Bis(2-oxazinyl)methan, 1,2-Bis(2-oxazinyl)ethan, 1,3-Bis(2-oxazinyl)propan oder 1,4-Bis(2-oxazinyl)butan, insbesondere 1,4-Bis(2-oxazinyl)benzol, 1,2-Bis(2-oxazinyl)benzol oder 1,3-Bis(2-oxazinyl)benzol.

Carbodiimide und polymere Carbodiimide werden beispielsweise von der Fa. Lanxxess unter dem Markennamen Stabaxol® oder von der Fa. Elastogran unter dem Markennamen Elastostab® vertrieben.

Beispiele sind: N,N'-Di-2,6-diisopropylphenylcarbodiimid, N,N'-Di-o-tolylcarbodiimid, N,N'-Diphenylcarbodiimid, N,N'-Dioctyldecylcarbodiimid, N,N'-Di-2,6-dimethylphenylcarbodiimid, N-Tolyl-N'-cyclohexylcarbodiimid, N,N'-Di-2,6-di-tert.-butylphenylcarbodiimid, N-Tolyl-N'-phenylcarbodiimid, N,N'-Di-p-nitrophenylcarbodiimid, N,N'-Di-p-aminophenylcarbodiimid, N,N'-Di-p-hydroxyphenylcarbodiimid, N,N'-Di-cyclohexylcarbodiimid, N,N'-Di-p-tolylcarbodiimid, p-Phenylen-bis-di-o-tolylcarbodiimid, p-Phenylen-bis-dicyclohexylcarbodiimid, Hexamethylen-bis-dicyclohexylcarbodiimid, 4,4'-Dicyclohexylmethancarbodiimid, Ethylenbis-diphenylcarbodiimid, N,N'-Benzylcarbodiimid, N-Octadecyl-N'-phenylcarbodiimid, N-Benzyl-N'-phenylcarbodiimid, N-Octadecyl-N'-tolylcarbodiimid, N-Cyclohexyl-N'-tolylcarbodiimid, N-Phenyl-N'-tolylcarbodiimid, N-Benzyl-N'-tolylcarbodiimid, N,N'-Di-o-ethylphenylcarbodiimid, N,N'-Di-p-ethylphenylcarbodiimid, N,N'-Di-o-isopropylphenylcarbodiimid, N,N'-Di-p-isopropylphenylcarbodiimid, N,N'-Di-o-isobutylphenylcarbodiimid, N,N'-Di-p-isobutylphenylcarbodiimid, N,N'-Di-2,6-diethylphenylcarbodiimid, N,N'-Di-2-ethyl-6-isopropylphenylcarbodiimid, N,N'-Di-2-isobutyl-6-isopropylphenylcarbodiimid, N,N'-Di-2,4,6-trimethylphenylcarbodiimid, N,N'-Di-2,4,6-triisopropylphenylcarbodiimid, N,N'-Di-2,4,6-triisobutylphenylcarbodiimid, Diisopropylcarbodiimid, Dimethylcarbodiimid, Diisobutylcarbodiimid, Dioctylcarbodiimid, t-Butylisopropylcarbodiimid, Di-β-naphthylcarbodiimid und Di-t-butylcarbodiimid.

Die Komponente d4 wird in 0,01 bis 4 Gew.-%, bevorzugt in 0,1 bis 2 Gew.-%, und besonders bevorzugt in 0,2 bis 1 Gew.-%, bezogen auf das Biopolymer eingesetzt. Die Komponente d4 kann auch als Säurefänger eingesetzt werden. Vorzugsweise wird in dieser Ausführungsform d4 in einer Konzentration von 0,01 bis 0,5 Gew.-% (Schritt iva) eingesetzt und anschließend wird eine Kettenverlängerung mit der Komponente d1, d2 und/oder d3a (Schritt ivb), die in einer Konzentration von vorzugsweise 0,2 bis 1,2 Gew.-% zugesetzt werden, durchgeführt.

In einer bevorzugten Ausführungsform des erfindungsgemäßen Verfahrens werden zwischen Stufe iii und iv oder während Stufe iv eine Komponente ausgewählt aus der Gruppe: Gleitmittel (e1), Nukleierungsmittel (e2) und/oder Verträglichkeitsvermittler (e3) zugefügt. Besonders bevorzugt erfolgt die Zugabe der Komponente E am Ende der Stufe iii.

Als Gleitmittel oder auch Formtrennmittel (Komponente e1) haben sich insbesondere Kohlenwasserstoffe, Fettalkohole, höhere Carbonsäuren, Metallsalze höherer Carbonsäuren wie Calcium- oder Zinkstearat, Fettsäureamide wie Erucasäureamid und Wachstypen, z-B. Paraffinwachse, Bienenwachs oder Montanwachse bewährt. Bevorzugte Gleitmittel sind Erucasäureamid und/oder Wachstypen und besonders bevorzugt Kombinationen dieser Gleitmittel. Bevorzugte Wachstypen sind Bienenwachse und Esterwachse, insbesondere Glycerinmonostearat oder Dimethylsiloxan oder Polydimethylsiloxan wie z.B. Belsil® DM der Fa. Wacker. Durch die Zugabe der Gleitmittel vor der Kettenverlängerung können die Gleitmittel an die Polymerkette teilweise angebunden werden. Ein vorzeitiges Ausschwitzen der Gleitmittel aus den fertigen Polymermassen kann auf diese Weise effektiv unterbunden werden.

Die Komponente e1 wird in der Regel in 0,05 bis 2,0 Gew.-% und vorzugsweise 0,1 bis 1,0 Gew.-% bezogen auf die Polymermasse am Ende der Stufe iii zugegeben.

Als Nukleierungsmittel (Komponente e2) kommen in der Regel anorganische Verbindungen wie Talkum, Kreide, Glimmer, Siliziumoxide oder Bariumsulfat in Frage. Bei den erfindungsgemäßen Polyestern haben sich insbesondere aromatische Polyester wie Polyethylenterephthalat und insbesondere Polybutylenterephthalat als vorteilhaft erwiesen. Überraschenderweise wurde gefunden, dass das Nukleierungsmittel e2, zugesetzt nach der Stufe iii, wesentlich effektiver wirkt als zugesetzt nach der Stufe iv. Die Einsatzmenge des Nukleierungsmittels lässt sich bei gleichem technischen Effekt wie schnelle Kristallisierneigung, Vermeidung von Klebrigkeit auf ca. die Hälfte der Einsatzmenge reduzieren. Mit anderen Worten man erhält Polymermassen, die aufgrund ihres niedrigen Gehalts an aromatischen Blöcken noch sehr gut biologisch abbaubar sind, aber dennoch aufgrund des verbesserten Kristallisierverhaltens keine Klebeneigung aufweisen.

Die Komponente e2 wird in der Regel in 0,05 bis 10,0 Gew.-%, bevorzugt 0,05 bis 5,0 Gew.-% und insbesondere bevorzugt 0,1 bis 1,0 Gew.-% bezogen auf die Polymermasse am Ende der Stufe iii zugegeben.

Als Verträglichkeitsvermittler haben sich aliphatische Polyester wie Polymilchsäure, Polycaprolacton, Polyhydroxyalkanoat oder Polyglykolsäure (PGA) als vorteilhaft erwiesen. Zugesetzt am Ende der Stufe iii können sie an die Polymerkette teilweise angebunden werden. Bei einem späteren Mischen der aliphatischen oder teilromatischen Polyester mit den diesen Polyestern wie Polymilchsäure, Polycaprolacton oder Polyhydroxyalkanoat wird eine verbesserte Verträglichkeit der Polymermischungen erreicht und es kann häufig ein Einsatz weiterer Verträglichkeitsvermittler unterbleiben. Mischt man die aliphatischen oder teilromatischen Polyester nach der Kettenverlängerung mit einem der obengenannten Mischungspartner, so ist die Verträglichkeit der Polymerkomponenten weniger ausgeprägt. In diesen Fällen ist es häufig nötig einen Verträglichkeitsvermittler der Polymermischung hinzuzufügen.

Die Komponente e3 wird in der Regel in 0,05 bis 15,0 Gew.-%, bevorzugt 0,1 bis 8,0 Gew.-% und insbesondere bevorzugt 0,1 bis 5,0 Gew.-% bezogen auf die Polymermasse am Ende der Stufe iii zugegeben.

Insbesondere bevorzugt werden biologisch abbaubare teilaromatische Polyester, die als aliphatische Dicarbonsäure (Komponente a1)) Bernsteinsäure, Adipinsäure oder Sebacinsäure, deren Ester oder Mischungen davon; als aromatische Dicarbonsäure (Komponente a2)) Terephthalsäure oder deren Ester; als Diolkomponente (Komponente B) 1,4-Butandiol oder 1,3-Propandiol, als Komponente b2) Glycerin, Pentaerytrit, Trimethylolpropan und als Komponente d1) Hexamethylendiisocyanat enthalten.

Das erfindungsgemäße Verfahren lässt sich auch zur Herstellung von aliphatischen Polyestern verwenden. Unter aliphatischen Polyestern werden Polyester aus aliphatischen C₂-C₁₂-Alkandiolen und aliphatischen C₄-C₃₆-Alkandicarbonsäuren wie Polybutylensuccinat (PBS), Polybutylenadipat (PBA), Polybutylensuccinatadipat (PBSA), Polybutylensuccinatsebacat (PBSSe), Polybutylensebacatadipat (PBSeA), Polybutylensebacat (PBSe) oder entsprechende Polyesteramide verstanden. Die aliphatischen Polyester werden von den Firmen Showa Highpolymers unter dem Namen Bionolle und von Mitsubishi unter dem Namen GSPla vermarktet. Neuere Entwicklungen sind in der EP08165370.1 beschrieben.

Die mit dem erfindungsgemäßen Verfahren hergestellten aliphatischen Polyester weisen in der Regel Viskositätszahlen nach DIN 53728 von 150 bis 320 cm³/g und vorzugsweise 150 bis 250 cm³/g auf.
Der MVR (Schmelzvolumenrate) nach EN ISO 1133 (190°C, 2,16 kg Gewicht) liegt im Allgemeinen bei 0,1 bis 70, bevorzugt bei 0,8 bis 70 und insbesondere bei 1 bis 60 cm³/10 min.
Die Säurezahlen nach DIN EN 12634 liegen im Allgemeinen bei 0,01 bis 1,2 mg KOH/g, vorzugsweise bei 0,01 bis 1,0 mg KOH/g und insbesondere bevorzugt bei 0,01 bis 0,7 mg KOH/g.

Die genannten aliphatischen und teilaromatischen Polyester und die erfindungsgemäßen Polyestermischungen sind biologisch abbaubar.

Im Sinne der vorliegenden Erfindung ist das Merkmal "biologisch abbaubar" für einen Stoff oder ein Stoffgemisch dann erfüllt, wenn dieser Stoff oder das Stoffgemisch entsprechend DIN EN 13432 einen prozentualen Grad des biologischen Abbaus von mindestens 90% aufweist.

Im Allgemeinen führt die biologische Abbaubarkeit dazu, dass die Polyester(mischungen) in einer angemessenen und nachweisbaren Zeitspanne zerfallen. Der Abbau kann enzymatisch, hydrolytisch, oxidativ und/oder durch Einwirkung elektromagnetischer Strahlung, beispielsweise UV-Strahlung, erfolgen und meist zum überwiegenden Teil durch die Einwirkung von Mikroorganismen wie Bakterien, Hefen, Pilzen und Algen bewirkt werden. Die biologische Abbaubarkeit lässt sich beispielsweise dadurch quantifizieren, dass Polyester mit Kompost gemischt und für eine bestimmte Zeit gelagert werden. Beispielsweise wird gemäß DIN EN 13432 CO₂-freie Luft durch gereiften Kompost während des Kompostierens strömen gelassen und dieser einem definierten Temperaturprogramm unterworfen. Hierbei wird die biologische Abbaubarkeit über das Verhältnis der Netto-CO₂-Freisetzung der Probe (nach Abzug der CO₂-Freisetzung durch den Kompost ohne Probe) zur maximalen CO₂-Freisetzung der Probe (berechnet aus dem Kohlenstoffgehalt der Probe) als prozentualer Grad des biologischen Abbaus definiert. Biologisch abbaubare Polyester(mischungen) zeigen in der Regel schon nach wenigen Tagen der Kompostierung deutliche Abbauerscheinungen wie Pilzbewuchs, Riss- und Lochbildung.

Andere Methoden zur Bestimmung der Bioabbaubarkeit werden beispielsweise in ASTM D 5338 und ASTM D 6400 beschrieben.

Die teilaromatischen Polyester sind in der Regel statistische Copolyester, d.h. der Einbau der aromatischen und aliphatischen Disäureeinhiten erfolgt rein zufällig. Die Verteilung der Länge der einzelnen Blöcke lässt sich nach B. Vollmert, Grundriss der makromolekularen Chemie berechnen. Wie von Witt et al. In J. Environ. Pol. Degradation, Band 4, Nr. 1 (1996), s. 9 beschrieben, ist der Abbau im Kompost von aromatischen Modeloligomeren mit n≥3 normalerweise sehr langsam. Bei teilaromatischen Polyestern werden jedoch auch Blockstrukturen rasch abgebaut:

Die bevorzugten teilaromatischen Polyester weisen in der Regel ein Molekulargewicht (Mₙ) im Bereich von 1000 bis 100000, insbesondere im Bereich von 9000 bis 75000 g/mol, bevorzugt im Bereich von 20000 bis 50000 g/mol, ein Molekulargewicht (Mw) von 50000 bis 300000, vorzugsweise 75000 bis 200000 g/mol und ein Mw/Mn-Verhältnis von 1 bis 6, vorzugsweise 2 bis 4 auf. Der Schmelzpunkt liegt im Bereich von 60 bis 170, bevorzugt im Bereich von 80 bis 150°C.

Der MVR (Schmelzevolumenrate) nach EN ISO 1133 (190°C, 2,16 kg Gewicht) nach Stufe 4 liegt im Allgemeinen bei 0,5 bis 6,0 cm³/10 min, bevorzugt bei 1,0 bis 5,0 und besonders bevorzugt bei 1,5 bis 3 cm³/10 min.

Die biologisch abbaubaren aliphatisch/aromatischen Polyester weisen in der Regel hohe Viskositätszahlen nach DIN 53728 von 160 bis 250 und vorzugsweise 170 bis 220 cm³/g auf. Im Folgenden ist im Zusammenhang mit Viskositätszahlen stets die Dimension cm³/g gemeint.

Neben einer hohen Viskositätszahl ist es wünschenswert, aliphatisch aromatische Copolyester bereitzustellen, die eine niedrige Säurezahl nach DIN EN 12634 aufweisen. Je niedriger die Säurezahl der aliphatisch/aromatischen Copolyester, desto hydrolysestabiler sind die Polyester für sich alleine genommen oder in Mischungen mit Biopolymeren wie Stärke (thermoplastifiziert oder nicht plastifiziert), Polylactid (PLA), Polyhydroxyalkanoaten, aliphatischem Polyester wie Bionolle®, Zellulose oder Polycaprolacton. Die Lagerstabilität der Polester(mischungen) verbessert sich entsprechend.

Weiterhin lassen sich die in Stufe iii) erhältlichen Prepolyester mit kleiner Säurezahl nach DIN EN 12634 - < 1,2, bevorzugt < 1,0, besonders bevorzugt < 0,9 mg KOH/g - besser kettenverlängern. Kurze Verweilzeiten mit effektiverem Molmassenaufbau und eine geringere Zunahme der Säurezahl in der Folgestufe iv) sind die Folge. Nebenreaktionen oder auch unerwünschte Stippenbildung lassen sich nahezu vollständig vermeiden. Die Säurezahl lässt sich vorzugsweise noch weiter senken, wenn die in Stufe iii) enthaltenen Prepolyester in einem Zwischenschritt iva) mit Säurefängem wie d3 und/oder d4 behandelt werden und dann erst einer Kettenverlängerung ivb unterzogen werden.

Insgesamt weisen die erfindungsgemäßen biologisch abbaubaren Copolyester (kettenverlängert - siehe Anspruch 13) mit kleiner Säurezahl und niedrigem MVR die folgenden Vorteile auf
- wenigere Molekulargewichtabbau während der Verarbeitung wie beispielsweise einer Compoundierung mit Stärke
- bessere Lagerstabilität
- bessere Schmelzestabilität bei der Folienherstellung und
- wegen des hohen Molekulargewichts hervorragende Anwendungseigenschaften im Spritzguss und insbesondere bei der Extrusion.

Im Folgenden wird das erfindungsgemäße Verfahren näher beschrieben.

In einer Vorstufe werden die Komponenten A, B und gegebenenfalls C gemischt. In der Regel werden 1,0 mol-Äquivalente einer Mischung aus aliphatischen und aromatischen Dicarbonsäuren oder deren Ester (Komponente A), 1,1 bis 1,5, vorzugsweise 1,2 bis 1,4 mol-Äquivalente aliphatischen Dyhydroxyverbindungen (Komponente b1), 0 bis 2, vorzugsweise 0,01 bis 0,5 Gew.-% bezogen auf Polymermenge nach Stufe iii einer Verbindung b2 und gegebenenfalls weitere Comonomere (Komponente C) vorgemischt.

In einer bevorzugten Verfahrensweise werden die Dicarbonsäuren als freie Säuren (Komponente A) eingesetzt. Hierbei wird die Mischung in den obengenannten Mischungsverhältnissen - ohne Zugabe eines Katalysators - zu einer üblicherweise auf 20 - 70°C temperierten Paste vermischt.

Alternativ hierzu werden die flüssigen Ester der Dicarbonsäuren (Komponente A) und die Dihydroxyverbindung und gegebenenfalls weiteren Comonomeren, in den obengenannten Mischungsverhältnissen - ohne Zugabe eines Katalysators - in der Regel bei einer Temperatur von 140 - 200°C vermischt.

In einer weiteren Alternative wird eine oder beide Dicarbonsäuren mit der aliphatischen Dyhydroxyverbindungen zu einem rein aliphatischen oder aromatischen Polyester in einer Vorstufe verestert und dieser dann mit der jeweils anderen Dicarbonsäure und weiterer aliphatischen Dyhydroxyverbindung sowie gegebenenfalls Verbindung b2 gemischt. Beispielsweise kann Polybutylenterephthalat und/oder Polybutylenadipinat in diese Vorstufe eingesetzt werden.

In Stufe i) wird die zuvor beschriebene Paste, Aufschlämmung und/oder Flüssigkeit (Vorstufe) aus aliphatischen und aromatischen Dicarbonsäuren (A) und einer aliphatischen Dihydroxyverbindung (b1), gegebenenfalls Verbindung (b2) und weiteren Comonomeren (Komponente C) in Gegenwart von 0,001 bis 1 Gew.-%, vorzugsweise 0,03 bis 0,2 bezogen auf Polymermenge nach Stufe iii eines Katalysators bis zu einer Viskositätszahl nach DIN 53728 von in der Regel 5 bis 15 cm³/g verestert.

Die überschüssige Diolkomponente wird in der Regel abdestilliert und nach beispielsweise destillativer Aufreinigung wieder dem Kreislauf zugeführt.

In Stufe i) wird entweder die Gesamtmenge oder eine Teilmenge - vorzugsweise 50 bis 80 Teile des Katalysators zudosiert. Als Katalysatoren werden üblicherweise Zink-, Aluminium und insbesondere Titan-Verbindungen eingesetzt. Titan-Katalysatoren wie Tetrabutylorthotitanat oder Tetra(iso-propyl)orthotitanat haben gegenüber den in der Literatur häufig verwendeten Zinn, Antimon, Kobalt und Blei-Verbindungen wie Zinndioctanat zudem den Vorteil, dass im Produkt verbleibende Restmengen des Katalysators oder Folgeprodukte des Katalysators weniger toxisch sind. Dieser Umstand ist bei den biologisch abbaubaren Polyestern besonders wichtig, da sie beispielsweise als Kompostierbeutel oder Mulchfolien unmittelbar in die Umwelt gelangen.

Gleichzeitig werden in Stufe i) eine Temperatur von 180 und 260 °C und vorzugsweise 220 bis 250°C sowie ein Druck von 0,6 bis 1,2 bar und vorzugsweise 0,8 bis 1,1 bar eingestellt. Die Stufe i) kann in einem Mischaggregat wie beispielsweise einem Hydrocylon durchgeführt werden. Typische Verweilzeiten liegen bei 1 bis 2 Stunden. Vorteilhaft werden Stufe i) und ii) in einem einzigen Reaktor wie beispielsweise einem Turmreaktor durchgeführt (siehe beispielsweise WO 03/042278 und DE-A 199 29 790) wobei der Reaktor die für die jeweilige Stufe geeigneten Einbauten aufweist.

Gegebenenfalls kann in Stufe i) und/oder ii) weitere Komponente b1 sowie die optionale Komponente c) zugefügt werden. Im Allgemeinen wird in Stufe i) ein Verhältnis von Komponente B (Diol) zu Disäuren A von 1,5 bis 2,5 und vorzugsweise 1,8 bis 2,2 eingestellt.

In Stufe ii) wird die in Stufe i (Veresterung) erhaltene Flüssigkeit zusammen mit gegebenenfalls der Restmenge an Katalysator in einen für die Vorkondensation geeigneten Reaktor eingespeist. Für die Vorkondensation haben sich Reaktoren wie ein Rohrbündelreaktor, eine Kesselkaskade oder eine Blasensäule und insbesondere eine Fallstromkaskade gegebenenfalls mit Entgasungseinheit als geeignet erwiesen (Fahrweise iia). In der Regel werden Reaktionstemperaturen von 230 bis 270 °C, vorzugsweise 240 bis 260 °C und Drucke zu Beginn der Stufe ii) von 0,1 bis 0,5, vorzugsweise 0,2 bis 0,4 bar und am Ende der Stufe ii) von 5 bis 100 mbar, vorzugsweise 5 bis 20 mbar eingestellt. Es lassen sich bei Verweilzeiten von 60 bis 160 Minuten aliphatisch/aromatische Präpolyester mit einer Viskositätszahl nach DIN 53728 von 20 bis 60 und vorzugsweise 25 bis 55 cm³/g herstellen. Die Säurezahlen nach DIN EN 12634 der Präpolyester können nach Stufe ii) in Abhängigkeit von der Herstellungsweise noch stark variieren. Startet man in der Vorstufe mit den freien Dicarbonsäuren, so liegen die Säurezahlen am Ende der Stufe ii) noch relativ hoch; sie sinken jedoch in Stufe iii) noch ab. Ist man in der Vorstufe mit den entsprechenden Dicarbonsäureester gestartet, so ist die Säurezahl m Ende der Stufe ii) vergleichsweise klein. Hier steigen jedoch die Säurezahlen im Verlauf der Stufe iii) an. In der Regel liegen die Säurezahlen nach DIN EN 12634 am Ende der Stufe ii) bei 0,7 bis 2 mg KOH/g.

Als besonders vorteilhaft für die Vorkondensation ii) haben sich die in WO-A 03/042278 und WO-A 05/042615 detailliert beschriebenen Turmreaktoren erwiesen, bei denen der Produktstrom im Gleichstrom über einen ein- oder mehrstufigen Fallfilmverdampfer geführt wird, wobei die Reaktionsdämpfe - insbesondere Wasser, THF und bei Einsatz von Dicarbonsäureestern Alkohole - an mehreren Stellen über den Reaktor verteilt abgezogen werden (Fahrweise iib). Auf die in WO-A 03/042278 und WO-A 05/042615 beschriebene Gleichstromfahrweise mit einer kontinuierlichen - mindestens an mehreren Stellen erfolgenden - Abführung der Reaktionsdämpfe wird hier ausdrücklich Bezug genommen. Diese Fahrweise hat insbesondere die folgenden Vorteile:
- man kann auf Pumpen zur Beförderung des Produktstroms weitgehend verzichten; der Produktablauf lässt sich als gravimetrischer Fluss einfacher steuern; Der Reaktor kann bei leichtem Überdruck, Normaldruck oder mit einem geringen Unterdruck (siehe oben) gefahren werden
- die kontinuierliche Abführung der Reaktionsdämpfe in situ aus dem Reaktionsgemisch schiebt das Gleichgewicht bei bereits sehr schonender Fahrweise auf die Seite der Reaktionsprodukte. Durch die rasche Abführung der Reaktionsdämpfe werden weiterhin Nebenreaktionen vermieden bzw. zumindest unterdrückt;
- In der Regel lassen sich mit der oben beschriebenen Fahrweise aliphatisch/aromatische Präpolyester mit einer Viskositätszahl nach DIN 53728 von 25 bis 55 cm³/g herstellen. Weiterhin weisen diese Präpolyester sehr niedrige Säurezahlen nach DIN EN 12634 auf.

Die Reaktionsbrüden, die im wesentlichen aus Wasser und bei Einsatz von Dicarbonsäureestern aus Alkohol, aus überschüssigem Diol und Nebenprodukt THF - bei Einsatz des Diols 1,4-Butandiol - bestehen, werden nach üblichen Verfahren destillativ aufgereinigt und in den Prozess wieder zurückgefahren.

Im Polykondensationsschritt iii) wird der vorkondensierte Polyester gegebenenfalls mit einem Deaktivator für den Katalysator versetzt. Als Deaktivatoren kommen insbesondere Phosphor-Verbindungen entweder Organophosphite wie phosphonige Säure oder phosphorige Säure in Betracht. Der Einsatz von Deaktivatoren ist besonders ratsam, wenn hochreaktive Titankatalysatoren eingesetzt werden. Die Deaktivatoren können in einer Menge von 0,001 bis 0,1 Gew.-%, vorzugsweise 0,01 bis 0,05 Gew.-% bezogen auf die Polymermenge nach Stufe iii), zugesetzt werden. Vorzugsweise wird ein Ti/P Verhältnis von 1,3-1,5 : 1 und insbesondere bevorzugt 1,1-1,3 : 1 eingestellt.

Im Polykondensationsschritt iii) wird der vorkondensierte Polyester gegebenenfalls mit einem Farbstabilisator für die Kondensation versetzt. Als Farbstabilisator kommen insbesondere Phophorverbindungen in Betracht. Beispiele sind Phosphorsäure, Phosphorige Säure, Triphenylphosphit, Triphenylphosphat, IrgafosPEPQ und Natriumhypophosphit und Natriumphosphit. Diese Phosphorverbindungen können auch als Gemisch verwendet werden. Der Einsatz von Farbstabilisatoren führt im Allgemeinen zu einer Verlangsamung der Kondensationsgeschwindigkeit. Ein besonderes geeigneter Farbstabilisatoren ist Triphenylphosphat, da die Kondensationsgeschwindigkeit nicht beeinträchtigt wird.

Die Farbstabilisatoren können in einer Menge von 0,001 bis 1,5 Gew.-%, vorzugsweise 0,01 bis 1,0 Gew.-% bezogen auf die Polymermenge nach Stufe iii), zugesetzt werden. Vorzugsweise wird ein Ti/P Verhältnis (mol/mol) von 1,0 : 0,3-1,0 und insbesondere bevorzugt 1,0 : 0,5-1,0 eingestellt.

Im Polykondensationsschritt iii) wird der vorkondensierte Polyester gegebenenfalls mit einem Aktivator für die Kondensation versetzt. Als Aktivator kommen insbesondere Phophorverbindungen in Betracht. Beispiele sind di-Natriumhydrogenphosphat, Calciumhypophosphit, Calciumphosphit, Calciumphosphat, Natriumhypophosphit, Natriumphosphit, Triphenylphosphit, Triphenylphosphat, Trimethylphosphat, Triethylphosphat, Tripropylphosphat, Tributylphosphat, Irgafos 168. Diese Phosphorverbindungen können auch als Gemische eingesetzt werden. Besonderes geeignete Aktivatoren sind di-Natriumhydrogenphosphat und Natriumphosphit.
Die Aktivatoren können in einer Menge von 0,001 bis 1,5 Gew.-%, vorzugsweise 0,01 bis 1,0 Gew.-% bezogen auf die Polymermenge nach Stufe iii), zugesetzt werden. Vorzugsweise wird ein Ti/P Verhältnis (mol/mol) von 1,0-1,5 : 1 und insbesondere bevorzugt 1,1-1,3:1 eingestellt.

Besonderes interessant ist der kombinierte Einsatz: Farbstabilisator und Aktivator wie beispielsweise Triphenylphosphat / di-Natriumhydrogenphosphat.

Die Polykondensation erfolgt in einem sogenannten Finisher. Als Finisher haben sich insbesondere Reaktoren wie ein Ringscheibenreaktor oder ein Käfigreaktor wie sie in der US 5779986 und EP 719582 beschrieben sind als geeignet erwiesen. Insbesondere letzterer trägt der mit zunehmender Reaktionsdauer zunehmende Viskosität des Polyesters Rechnung. In der Regel werden Reaktionstemperaturen von 220 bis 270°C, vorzugsweise 230 bis 250°C und Drucke von 0,2 bis 5 mbar, vorzugsweise 0,5 bis 3mbar eingestellt. Es lassen sich bei Verweilzeiten von 30 bis 90 Minuten, vorzugsweise 40 bis 80 Minuten aliphatisch/aromatische Polyester mit einer Viskositätszahl nach DIN 53728 von 70 bis 130 cm³/g und Säurezahlen nach DIN EN 12634 von 0,5 bis 1,2 vorzugsweise 0,6 bis 0,9 mg KOH/g herstellen. Typische Molekulargewichte (Mn) liegen bei 10000 bis 25000, Molekulargewichte (Mw) bei 35000 bis 70000 bei dieser Stufe.

In der Kettenverlängerung (Stufe iv) wird der polykondensierte Polyester zusammen mit 0,01 bis 4 Gew.-%, vorzugsweise 0,1 bis 2 Gew.-% und insbesondere bevorzugt 0,5 bis 1,2 Gew.-% bezogen auf den Polyester in einen Extruder, einem kontinuierlichen Kneter (List-Reaktor) oder einem statischen Mischer eingespeist. Beispielhaft seien folgende Einbauten genannt: Beim statischer Mischer können SMR, SMX, SMXL-Elemente oder Kombinationen daraus z.B. von Fa. Sulzer Chemtech AG, Schweiz eingesetzt werden. Beispiele für einen List-Reaktor sind je nach Anwendungsfeld: ein einwelliger DISCOTHERM B oder zweiwellige CRP- und ORP-Reaktoren. Als Extruder kommen Ein- oder Zweiwellenextruder in Frage.

Als Kettenverlängerer kommen die zuvor beschriebenen Isocyanate oder Isocyanurate d1, Peroxide d2 und Epoxide d3a in Frage. Beispielsweise sind dies Diisocyanate ausgewählt aus der Gruppe bestehend aus Toluylen-2,4-diisocyanat, Toluylen-2,6-diisocyanat, 4,4'- und 2,4'-Diphenylmethan-diisocyanat, Naphthylen-1,5-diisocyanat, Xylylendiisocyanat, Hexamethylendiisocyanat, Pentamethylendiisocyanat, Isophorondiisocyanat und Methylen-bis (4-isocyanatocyclohexan). Besonders bevorzugt ist Hexamethylendiisocyanat.

Zur Herstellung von Polyestern im beanspruchten Viskositätsbereich und gleichzeitig niedrigen Säurezahlen kann es vorteilhaft sein, sogenannte Säurefänger wie die eingangs beschriebenen Komponenten d3 und d4 zuzusetzen. Vorzugsweise geschieht dies in einer Konzentration von 0,01 bis 2,0 und insbesondere von 0,02 bis 1,0 Gew.-% bezogen auf die Polymermischung. Die Zugabe der Säurefänger erfolgt sinnvoller Weise zu Beginn, während oder am Ende der Stufe iii oder in einem vorgelagerten Schritt iva vor der Kettenverlängerung ivb. Als Kettenverlängerer sind die Komponenten d1, d2 und d3a besonders gut geeignet. Die Säurefänger d3 und d4 können jedoch auch nach Zugabe der Kettenverlängerer d1 und d2 zugegeben werden.

Die Kettenverlängerung (Polyaddition, Stufe iv) erfolgt bei Reaktionstemperaturen von 220 bis 270°C, vorzugsweise 230 bis 250°C und bei Überdruck oder Normaldruck je nach verwendetem System. Es lassen sich bei Verweilzeiten von 2 bis 30 Minuten, vorzugsweise 4 bis 15 Minuten aliphatisch/aromatische Polyester mit einer Viskositätszahl nach DIN 53728 von 160 bis 250 cm³/g, und Säurezahlen nach DIN EN 12634 von vorzugsweise 0,5 bis 1,2 und insbesondere bevorzugt von 0,6 bis 1,0 mg KOH/g realisieren.

Der MVR (Schmelzevolumenrate) nach EN ISO 1133 (190°C, 2,16 kg Gewicht) nach Stufe 4 liegt im Allgemeinen bei 0,5 bis 6,0 cm³/10 min, bevorzugt bei 1,0 bis 5,0 und besonders bevorzugt bei 1,5 bis 3 cm³/10 min.

Während die Verbindungen b2 wie zuvor beschrieben insbesondere als Vernetzer wirken, wirken die Isocyanate bei niedrigen Temperaturen insbesondere als lineare Kettenverlängerer. Wird die Kettenverlängerung (Stufe iv) bei höheren Temperaturen, insbesondere bei Temperaturen über 120 °C, durchgeführt, tritt Allophanatbildung auf. Der Kettenverlängerer wirkt nunmehr auch als Verzweiger und hat unmittelbaren Einfluss auf die strukturelle Viskosität der biologisch abbaubaren Polyester. Das rheologische Verhalten der Schmelzen verbessert sich; die biologisch abbaubaren Polyester lassen sich leichter verarbeiten, beispielsweise besser zu Folien durch Schmelzeverfestigung ausziehen. Die Isocyanate d1 wirken scherentzähend, d.h. die Viskosität unter Belastung wird geringer.

Der Reaktor, in dem die Kettenreaktion durchgeführt wird, hat die zuvor beschriebenen Einbauten, die für eine gute Durchmischung des Produktstroms sorgen.

Auf Grund des starken Viskositätsaufbaus bei der Kettenverlängerung kann es von Vorteil sein, die Kettenverlängerung im Reaktor nur soweit zu fahren bis der Kettenverlängerer zumindest mit einer funktionellen Einheit abreagiert hat. Die Vollendung des Kettenaufbaus kann beispielsweise in einem separaten Rührkessel oder in einem Rohr ohne Einbauten erfolgen. Auf diese Weise lassen sich Verstopfungen und Wandbelegungen vermeiden.

Die abreagierte Schmelze wird in der Regel über einen Schmelzefilter direkt in die Konfektionierung wie beispielsweise eine Unterwassergranulierung übergeführt.

Mit dem erfindungsgemäßen vierstufigen Verfahren lassen sich prozessfähig und effizient aliphatisch/aromatische Polyester herstellen.

Führt man die Vorkondensation ii) beispielsweise in einem Turmreaktor durch, wobei im Gleichstrom der Produktstrom über einen Fallfilmverdampfer geführt wird und die Reaktionsdämpfe in situ aus dem Reaktionsgemisch entfernt werden, so lassen sich Präpolyester mit Viskositätszahlen nach DIN 53728 von 25 bis 55 cm³/g und gleichzeitig niedrigen Säurezahlen von kleiner als 0,9 mg KOH/g gewinnen. Bei Einsatz von freien Säuren - wie beispielsweise der Terephthalsäure kann die Säurezahl in Stufe ii) noch höher liegen, in Stufe iii) sinkt sie jedoch auf unter 0,9 mg KOH/g ab. Diese Präpolyester lassen sich effizienter und schonender polykondensieren und mit insbesondere Hexamethylendiisocyanat effizienter und schonender kettenverlängern. Mit dieser Ausführungsform des erfindungsgemäßen Verfahrens lassen sich erstmals aliphatisch/aromatische Polyester mit einer Viskositätszahl nach DIN 53728 von größer 160 cm³/g und einer Säurezahl von kleiner 1 mg KOH/g sowie einer MVR nach EN I-SO1133 kleiner als 6,0 cm³/10 Min herstellen.

Aufgrund der niedrigen MVR lassen sich die erfindungsgemäßen Polyester (siehe Ansprüche 16 und 19) hervorragend verarbeiten. Zudem weisen sie eine sehr niedrige Säurezahl auf, was wiederum eine gute Hydrolysestabilität zur Folge hat. Die erfindungsgemäßen Polyester eignen sich daher auch zur Herstellung von biologisch abbaubaren Polymermischungen enthaltend einer oder mehrerer Komponenten ausgewählt aus der Gruppe bestehend aus aliphatischem Polyester wie beispielsweise Bionolle® (Fa. Showa Highpolymer), Polycaprolacton, Stärke (thermoplastifiziert oder nicht plastifiziert), Zellulose, Polyhydroxyalkanoate (Produkte der Firmen PHB Industrial, Tianan, Metabolix) und Polymilchsäure wie beispielsweise NatureWorks® (Fa. Cargill).

In der Regel enthalten diese biologisch abbaubaren Polyestermischungen
i) 5 bis 95 Gew.-%, vorzugsweise 20 bis 80 Gew.-% des erfindungsgemäßen Polyesters;
ii) 95 bis 5 Gew.-%, vorzugsweise 80 bis 20 Gew.-% mindestens einer oder mehrerer Komponenten ausgewählt aus der Gruppe bestehend aus aliphatischem Polyester, Polycaprolacton, Stärke, Zellulose, Polyhydroxyalkanoat und Polymilchsäure.

Die im Stand der Technik bekannten aliphatisch/aromatischen Polyester weisen hingegen folgende Kenzahlen auf:

| | Säurezahl [mg KOH/g] DIN 12634 | Viskositätszahl [cm³/g] DIN 53728 | MVR [cm³/10 min] ISO 1133 |
|---|---|---|---|
| EaststarBio ® (PBAT) | 3 | -- | 28 |
| EnPol®G8060 (PBAT) | 6,3 | 174 | 9 |

| | | | |
|---|---|---|---|
| PBAT = Polybutylenadipat-coterephthalat | | | |

### Messmethoden:

Die Säurezahl wurde nach DIN EN 12634 vom Oktober 1998 bestimmt. Als Lösemittelgemisch wurde eine Mischung aus 1 Volumenteil DMSO, 8 Volumenteile Propan-2-ol und 7 Volumenteile Toluol verwendet. Die Probe wurde auf 50°C erhitzt und mit einer Einstabelektrode mit Kaliumchlorid Füllung verknüpft. Als Maßlösung wurde eine Tetramethylammonium-Hydroxid-Maßlösung verwendet.

Die Bestimmung der Viskositätszahl erfolgt nach DIN 53728 Teil 3, 3. Januar 1985. Als Lösungsmittel wurde das Gemisch: Phenol/Dichlorbenzol im Gewichtsverhältnis 50/50 verwendet.

Die Bestimmung der Schmelze-Volumenfließrate (MVR) erfolgte nach ISO 1133. Die Prüfbedingungen betrugen 190°C, 2,16 kg. Die Aufschmelzzeit betrug 4 Minuten. Der MVR gibt die Geschwindigkeit der Extrusion eines geschmolzenen Kunststoff-Formteils durch ein Extrusionswerkzeug von festgelegter Länge und festgelegtem Durchmesser unter den vorbeschriebenen Bedingungen: Temperatur, Belastung und Lage des Kolbens. Bestimmt wird das in einer festgelegten Zeit extrudierte Volumen im Zylinder eines Extrusionsplastometers.

### Beispiele

### 1. Kontinuierliche Herstellung von Polybutylenadipat-co-terephthalat kettenverlängert mit HDI (Verfahren gemäß den Ansprüchen 1 bis 4)

Zur Herstellung des biologisch abbaubaren Polyesters wurden 440 kg/h Dimethylterephthalat, 510 kg/h eines Prepolyesters aus Adipinsäure und 1,4 Butandiol (Mn 2000 g/mol), 270 kg/h 1,4- Butandiol und 1,0 kg/h Glycerin mit 0,55 kg/h Tetrabutylorthotitanat kontinuierlich in eine mehrstufige Rührkesselkaskade gegeben. Das Reaktionsgemisch wurde bei Normaldruck innerhalb der Rührkesselkaskade bei Temperaturen von 180°C bis 210°C und einer Verweilzeit von 2,5 h umgeestert und das entstehende Kondensationsprodukt Methanol abdestilliert. Der so erhaltende niedermolekulare Polyester wies eine Viskositätszahl (VZ) von 10 cm³/g auf.

Anschließend wurde das Reaktionsgemisch in einen nachgeschalteten Steigrohrreaktor, in dem die Schmelze durch eine Vielzahl an beheizten Rohren geführt wird (siehe DE 19509551) unter Zugabe von 0,30 kg/h Tetrabutylorthotitanat auf 260 °C erhitzt, der Druck auf 100 mbar abgesenkt und der überwiegende Teil an überschüssigem Butandiol abdestilliert. Nach einer Verweilzeit von 45 Minuten wies der Polyester eine VZ von 23 cm³/g auf.
Nach Zugabe von 0,28 kg/h phosphoriger Säure wurde das Reaktionsgemisch in einen Ringscheibenreaktor (vergleiche US 5,779,986) übergeführt, und bei einer Temperatur von 250 °C und einem Druck von 4 mbar für weitere 45 Minuten polykondensiert und der verbleibende Überschuss an Butandiol abdestilliert. Der so erhaltene Polyester wies eine VZ von 89 cm³/g und eine Säurezahl (SZ) von 1,0 mg KOH/g auf.
Im Anschluss an die Polykondensation wurden zu dem Polyester bei 240°C 8,0 kg/h Hexamethylendiisocyanat (HDI) unter Verwendung eines statischen Mischsystems zudosiert. Nach einer Verweilzeit von 7 Minuten wurde der Polyester unter Verwendung einer Unterwasser-Granulierung granuliert und getrocknet. Der so erhaltene Polyester wies eine VZ von 191 cm³/g, ein Molekulargewicht Mn von 36.000 g/mol (bzw. Mw von 125.000 g/mol), eine MVR von 3 cm³/10 min und eine SZ von 1,1 mg KOH/g auf. An Stelle eines statischen Mischers wurde in einem weiteren Versuch in Stufe iv) ein List-Reaktor eingesetzt. Die damit erhaltenen Polymere wiesen vergleichbare Eigenschaften (Säurezahl, Viskositätszahl, MVR) auf.

### 2. Kontinuierliche Herstellung von Polybutylenadipat-co-terephthalat kettenverlängert mit HDI (Verfahren gemäß den Ansprüchen 5 und 6)

Zur Herstellung des biologisch abbaubaren Polyesters wurden 19 kg/h Terephthalsäure, 19 kg/h Adipinsäure, 32 kg/h 1,4-Butandiol und 0,05 kg/h Glycerin bei 35°C physikalisch gemischt und anschließend das Gemisch kontinuierlich in einen Veresterungskessel (z.B. ausgelegt als Hydrozyklon, wie z.B. beschrieben in WO 03/042278 A1) übergeführt. Unter Zugabe von weiteren 16 kg/h 1,4-Butandiol und 0,022 kg/h Tetrabutylorthotitanat (TBOT) wurde das Gemisch bei einer Temperatur von 240°C, einer Verweilzeit von 1,5 h und einem Druck von 0,85 bar verestert und das entstehende Kondensationsprodukt Wasser, sowie Teile des Überschusses an Butandiol abdestilliert. Der so erhaltende niedermolekulare Polyester wies eine Viskositätszahl (VZ) von 12 cm³/g auf.
Anschließend wurde das Reaktionsgemisch unter Zugabe von weiteren 0,012 kg TBOT/h, bei einer von 250 auf 260 °C ansteigenden Temperatur, einer Verweilzeit von 2 h und einem von 300 mbar auf 10 mbar sinkendem Druck über eine Fallstromkaskade (wie z.B. beschrieben in WO 03/042278 A1) geführt und der überwiegende Teil an überschüssigem Butandiol abdestilliert. Der so erhaltende Polyester wies eine Viskositätszahl (VZ) von 47 cm³/g auf.
Nach Zugabe von 0, 01 kg/h phosphoriger Säure wurde das Reaktionsgemisch in einen Polykondensationsreaktor (wie z.B. beschrieben in EP 0719582) übergeführt, und bei einer Temperatur von 245°C und einem Druck von 1 mbar für weitere 45 Minuten polykondensiert und der verbleibende Überschuss an Butandiol abdestilliert. Der so erhaltene Polyester wies eine VZ von 95 cm³/g und eine Säurezahl (SZ) von 0,6 mg KOH/g auf.
Im Anschluss an die Polykondensation wurden zu dem Polyester bei 240°C 0,4 kg/h Hexamethylendiisocyanat (HDI) unter Verwendung eines statischen Mischsystems zudosiert. Nach einer Verweilzeit von 7 Minuten wurde der Polyester unter Verwendung einer Unterwasser-Granulierung granuliert und getrocknet. Der so erhaltene Polyester wies eine VZ von 235 cm³/g, ein Molekulargewicht Mn von 47.000 g/mol (bzw. Mw von 165.000 g/mol), eine MVR von 1,9 cm³/10 min und eine SZ von 0,7 mg KOH/g auf. An Stelle eines statischen Mischers wurde in einem weiteren Versuch in Stufe iv) ein List-Reaktor eingesetzt. Die damit erhaltenen Polymere wiesen vergleichbare Eigenschaften (Säurezahl, Viskositätszahl, MVR) auf.

### 3. Vergleichsbeispiel Batch-weise Herstellung von Polybutylenadipat-co-terephthalat kettenverlängert mit HDI

Zur Herstellung des biologisch abbaubaren Polyesters wurden 3700 kg Dimethylterephthalat, 4300 kg eines Prepolyesters aus Adipinsäure und 1,4 Butandiol (Mn 2000 g/mol), 2200 kg 1,4- Butandiol, 8,5 kg Glycerin und 2,4 kg Tetrabutylorthotitanat in einen Rührkessel gegeben. Unter Abdestillieren des Überschusses an 1,4-Butandiol wurde das Reaktionsgemisch innerhalb von 8 h stufenweise auf eine Temperatur von 245°C erhitzt und gleichzeitig der Druck stufenweise auf 5 mbar gesenkt. Anschließend wurden unter Vakuum 0,6 kg phosphorige Säure unter Rühren zugegeben. Der so erhaltende Polyester wies eine Viskositätszahl (VZ) von 91 cm³/g und eine Säurezahl (SZ) von 1,3 mg KOH/g auf. Im Anschluss an die Polykondensation wurden zu dem Polyester bei 240°C 6,8 kg/h Hexamethylendiisocyanat (HDI) unter Verwendung eines statischen Mischsystems zudosiert. Nach einer Verweilzeit von 7 Minuten wurde der Polyester unter Verwendung einer Unterwasser-Granulierung granuliert und getrocknet. Der so erhaltene Polyester wies eine VZ von 170 cm³/g, ein Molekulargewicht Mn von 32.000 g/mol (bzw. Mw von 95.000 g/mol), eine MVR von 6,0 cm³/10 min und eine SZ von 1,5 mg KOH/g auf.

## Patentansprüche

1. Verfahren zur kontinuierlichen Herstellung eines biologisch abbaubaren Polyesters auf Basis von aliphatischen oder aliphatischen und aromatischen Dicarbonsäuren und aliphatischen Dihydroxyverbindungen, wobei
eine Mischung aus den aliphatischen Dyhydroxyverbindungen, den aliphatischen und aromatischen Dicarbonsäuren und gegebenenfalls weiteren Comonomeren (Komponente C), ohne Zugabe eines Katalysators, zu einer Paste vermischt werden oder alternativ die flüssigen Ester der Dicarbonsäuren und die Dihydroxyverbindung und gegebenenfalls weiteren Comonomeren, ohne Zugabe eines Katalysators, eingespeist werden, wobei
i) in eine ersten Stufe diese Mischung zusammen mit der Gesamtmenge oder einer Teilmenge des Katalysators kontinuierlich verestert bzw. umgeestert wird;
ii) in einer zweiten Stufe kontinuierlich das gemäß i) erhaltene Umesterungs- bzw. Veresterungsprodukt bis zu einer Viskositätszahl nach DIN 53728 von 20 bis 70 cm³/g vorkondensiert wird;
iii) in einer dritten Stufe kontinuierlich das aus ii) erhältliche Produkt bis zu einer Viskositätszahl nach DIN 53728 von 60 bis 170 cm³/g polykondensiert wird und
iv) in einer vierten Stufe kontinuierlich das aus iii) erhältliche Produkt bis zu einer Viskositätszahl nach DIN 53728 von 150 bis 320 cm³/g in einer Polyadditionsreaktion mit einem Kettenverlängerer D umgesetzt wird.

2. Verfahren nach Anspruch 1, wobei der biologisch abbaubare Polyester aufgebaut ist aus:
A) einer Säurekomponente aus
a1) 30 bis 99 mol-% mindestens einer aliphatischen Dicarbonsäure oder deren Ester oder Mischungen davon
a2) 1 bis 70 mol-% mindestens einer aromatischen Dicarbonsäure oder deren Ester oder Mischungen davon und
a3) 0 bis 5 mol-% einer sulfonatgruppenhaltigen Verbindung,
wobei die Molprozente der Komponenten a1) bis a3) zusammen 100% ergeben und
B) einer Diolkomponente aus:
b1) mindestens äquimolare Mengen zur Komponente A eines C₂-bis C₁₂-Alkandiol oder Mischungen davon und
b2) 0 bis 2 Gew.-% bezogen auf die Komponenten A und b1) einer mindestens 3 funktionelle Gruppen enthaltenden Verbindung;
und gegebenenfalls darüber hinaus eine oder mehrere Komponenten ausgewählt aus
C) einer Komponente ausgewählt aus
c1) mindestens einer Etherfunktionen enthaltenden Dihydroxyverbindung der Formel I
HO-[(CH₂)ₙ-O)]ₘ-H (I)
in der n für 2, 3 oder 4 und m für eine ganze Zahl von 2 bis 250 stehen,
c2) mindestens einer Hydroxycarbonsäure der Formel IIa oder IIb 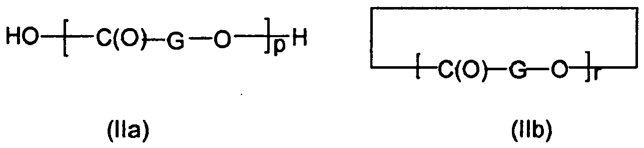 in der p eine ganze Zahl von 1 bis 1500 und r eine ganze Zahl von 1 bis 4 bedeuten, und G für einen Rest steht, der ausgewählt ist aus der Gruppe bestehend aus Phenylen, -(CH₂)_{q}-, wobei q eine ganze Zahl von 1 bis 5 bedeutet, -C(R)H- und -C(R)HCH₂, wobei R für Methyl oder Ethyl steht
c3) mindestens einem Amino-C₂- bis C₁₂-alkanol oder mindestens einem Amino-C₅-bis C₁₀-cycloalkanol oder Mischungen davon
c4) mindestens einem Diamino-C₁- bis C₈-Alkan
c5) mindestens einer Aminocarbonsäureverbindung, ausgewählt aus der Gruppe, bestehend aus Caprolactam, 1,6 Aminocapronsäure, Laurinlactam, 1,12-Aminolaurinsäure und 1,11-Aminoundecansäure
oder Mischungen aus c1) bis c5)
und
D) 0,01 bis 4 Gew.-% bezogen auf die Polyestermenge nach Stufe iii mindestens einer Komponente ausgewählt aus der Gruppe d1) bis d4)
d1) eines di- oder oligofunktionellen Isoscyanats und/oder Isocyanurat,
d2) eines di- oder oligofunktionellen Peroxids,
d3) eines di- oder oligofunktionellen Epoxids,
d4) eines di- oder oligofunktionellen Oxazolins, Oxazins, Caprolactams und/oder Carbodiimids;
E) 0 bis 10 Gew.-% bezogen auf die Polyestermenge nach Stufe iii einer Komponente ausgewählt aus der Gruppe e1) bis e3)
e1) eines Gleitmittels wie Erucasäureamid oder ein Stearat,
e2) eines Nukleierungsmittels wie Calciumcarbonat, Polyethylenterephthalats oder Polybutylenterephthalats,
e3) eines aliphatischen Polyesters ausgewählt aus der Gruppe bestehend aus: Polymilchsäure, Polycaprolacton, Polyhydroxyalkanoat.

3. Verfahren nach Anspruch 1, wobei der biologisch abbaubare Polyester als aliphatische Dicarbonsäure (Komponente a1)) Bernsteinsäure, Adipinsäure oder Sebacinsäure, deren Ester oder Mischungen davon;
als aromatische Dicarbonsäure (Komponente a2)) Terephthalsäure oder deren Ester;
als Diolkomponente (Komponente B) 1,4-Butandiol oder 1,3-Propandiol,
als Komponente b2) Glycerin, Pentaerytrit, Trimethylolpropan und
als Komponente d1) Hexamethylendiisocyanat enthält.

4. Verfahren nach den Ansprüchen 1 bis 3, wobei die Veresterung /Umesterung (Stufe i)) - in Form eines Hydrozyklons mit anhängendem Wärmetauscher und Stufe i), ii) und iii) in Gegenwart eines Titankatalysators durchgeführt wird.

5. Verfahren nach den Ansprüchen 1 bis 4, wobei Stufe ii) in einem Turmreaktor durchgeführt wird und der Produktstrom im Gleichstrom über eine Fallfilmkaskade geführt wird und die Reaktionsdämpfe in situ aus dem Reaktionsgemisch entfernt werden.

6. Verfahren nach Anspruch 5, wobei in Stufe ii) das Umesterungs- bzw. Veresterungsprodukt bis zu einer Viskositätszahl nach DIN 53728 von 25 bis 55 cm³/g vorkondensiert wird.

7. Verfahren nach einem der Ansprüche 1 bis 6, wobei zwischen Stufe ii) und iii) dem Produktstrom 0,001 bis 0,1 Gew.-% einer deaktivierenden Phoshorverbindung oder 0,001 bis 1,5 Gew.-% einer farbstabilisierenden oder aktivierenden Phosphorverbindung zugefügt werden.

8. Verfahren nach einem der Ansprüche 1 bis 6, wobei zu Beginn, während oder am Ende der Stufe iii oder in einem vorgelagerten Schritt iva der Kettenverlängerung ivb 0,01 bis 2,0 Gew.-% bezogen auf die jeweilige Polymermasse eines Säurefängers ausgewählt aus der Gruppe eines di-oder oligofunktionellen Epooxids (d3), Oxazolins, Oxazins, Caprolactams und/oder Carbodiimids (d4) zugegeben wird.

9. Verfahren nach einem der Ansprüche 1 bis 8, wobei Stufe iii) in einem Ringscheibenreaktor oder Käfigreaktor durchgeführt wird.

10. Verfahren nach einem der Ansprüche 1 bis 9, wobei nach Stufe iii) 0,05 bis 2,0 Gew.-% bezogen auf die Polymermasse nach Stufe iii eines Gleitmittels e1 zugegeben wird.

11. Verfahren nach einem der Ansprüche 1 bis 9, wobei nach Stufe iii) 0,05 bis 5,0 Gew.-% bezogen auf die Polymermasse nach Stufe iii eines Nukleierungsmittels e2 zugegeben wird.

12. Verfahren nach einem der Ansprüche 1 bis 9, wobei nach Stufe iii) 0,05 bis 15,0 Gew.-% bezogen auf die Polymermasse nach Stufe iii eines Verträglichkeitsvermittlers e3 zugegeben wird.

13. Verfahren nach einem der Ansprüche 1 bis 12 wobei Stufe iv) in einem Extruder, List-Reaktor oder statischen Mischer durchgeführt wird.

14. Verfahren nach Anspruch 13, wobei in Stufe iv) als Kettenverlängerer Hexamethylendiisocyanat (Komponente d1) eingesetzt wird.

15. Biologisch abbaubarer Polyester auf Basis von aliphatischen und aromatischen Dicarbonsäuren und aliphatischen Dihydroxyverbindungen, erhältlich nach einem Verfahren gemäß Anspruch 6.

16. Biologisch abbaubarer Polyester auf Basis von aliphatischen und aromatischen Dicarbonsäuren und aliphatischen Dihydroxyverbindungen, erhältlich nach einem Verfahren gemäß Anspruch 6 und einer Kettenverlängerung gemäß Anspruch 14.

17. Biologisch abbaubarer Polyester auf Basis von aliphatischen und aromatischen Dicarbonsäuren und aliphatischen Dihydroxyverbindungen, erhältlich nach einem Verfahren gemäß Anspruch 11.

18. Biologisch abbaubarer Polyester auf Basis von aliphatischen und aromatischen Dicarbonsäuren und aliphatischen Dihydroxyverbindungen, erhältlich nach einem Verfahren gemäß Anspruch 12.

19. Biologisch abbaubarer Polyester aufgebaut aus:
A) einer Säurekomponente aus
a1) 35 bis 60 mol-% mindestens einer aliphatischen Dicarbonsäure oder deren Ester oder Mischungen davon ausgewählt aus der Gruppe bestehend aus: Bernsteinsäure, Adipinsäure und Sebacinsäure;
a2) 65 bis 40 mol-% Terephthalsäure oder deren Ester oder Mischungen davon und
wobei die Molprozente der Komponenten a1) und a2) zusammen 100% ergeben und;
B) einer Diolkomponente (b1) ausgewählt aus der Gruppe bestehend aus: aus 1,4-Butandiol oder 1,3-Propandiol oder Mischungen davon;
b2) 0,05 bis 1 Gew.-% bezogen auf die Komponenten A und B Glycerin,
D) einer Komponente
d1) 0,1 bis 2 Gew.-% bezogen auf die Komponenten A und B Hexamethylendiisocyanat;
und einer Säurezahl gemessen nach DIN EN 12634 von kleiner als 1,0 mg KOH/g und einer MVR nach ISO 1133 von kleiner 6 cm³/10 min (190°C, 2,16 kg Gewicht).

20. Biologisch abbaubare Polyestermischung enthaltend
i) 5 bis 95 Gew.-% eines Polyesters gemäß Anspruch 19;
ii) 95 bis 5 Gew.-% mindestens einer oder mehrerer Komponenten ausgewählt aus der Gruppe bestehend aus aliphatischem Polyester, Polycaprolacton, Stärke, Zellulose, Polyhydroxyalkanoat, Polyglykolsäure und Polymilchsäure.

21. Verwendung von Polyestern gemäß Anspruch 18 zur Herstellung von biologisch abbaubaren Polymermischungen.

## Claims

1. A process for the continuous production of a biodegradable polyester based on aliphatic or aliphatic and aromatic dicarboxylic acids and on aliphatic dihydroxy compounds, where
a mixture composed of the aliphatic dihydroxy compounds, of the aliphatic and aromatic dicarboxylic acids, and optionally of further comonomers (component C) is mixed, without addition of a catalyst, to give a paste, or, as an alternative, the liquid esters of the dicarboxylic acids are fed into the system, as also are the dihydroxy compound and optionally further comonomers, without addition of any catalyst, where
i) in a first stage, this mixture, together with the entire amount or with a portion of the catalyst, is continuously esterified or, respectively, transesterified;
ii) in a second stage, the transesterification or, respectively, esterification product obtained in i) is continuously precondensed to an intrinsic viscosity of from 20 to 70 cm³/g to DIN 53728;
iii)in a third stage, the product obtainable from ii) is continuously polycondensed to an intrinsic viscosity of from 60 to 170 cm³/g to DIN 53728, and
iv) in a fourth stage, the product obtainable from iii) is reacted continuously with a chain extender D in a polyaddition reaction to an intrinsic viscosity of from 150 to 320 cm³/g to DIN 53728.

2. The process according to claim 1, where the biodegradable polyester is composed of:
A) an acid component composed of
a1) from 30 to 99 mod% of at least once aliphatic dicarboxylic acid or its esters, or a mixture thereof,
a2) from 1 to 70 mol% of at least one aromatic dicarboxylic acid or its esters, or a mixture thereof, and
a3) from 0 to 5 mol% of a compound comprising sulfonate groups,
where the total of the molar percentages of components a1) to a3) is 100%, and
B) a diol component composed of:
b1) at least equimolar amounts with respect to component A of a C₂-C₁₂ alkanediol, or a mixture thereof, and
b2) from 0 to 2% by weight, based on components A and b1), of a compound comprising at least 3 functional groups;
and optionally one or more components selected from
C) a component selected from
c1) at least one dihydroxy compound comprising ether functions and having the formula I
HO-[(CH₂)ₙ-O]ₘ-H (I)
where n is 2, 3 or 4 and m is a whole number from 2 to 250,
c2) at least one hydroxycarboxylic acid of the formula IIa or IIb 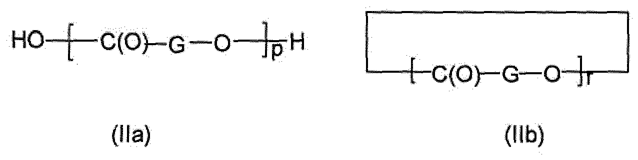 where p is a whole number from 1 to 1500 and r is a whole number from 1 to 4, and G is a radical selected from the group consisting of phenylene, -(CH₂)_{q}-, where q is a whole number from 1 to 5, -C(R)H- and -C(R)HCH₂, where R is methyl or ethyl,
c3) at least one amino-C₂-C₁₂ alkanol, or at least one amino-C₅-C₁₀ cycloalkanol, or a mixture of these,
c4) at least one diamino-C₁-C₈ alkane,
c5) at least one aminocarboxylic acid compound selected from the group consisting of caprolactam, 1,6-aminocaproic acid, laurolactam, 1,12-aminolauric acid, and 1,11-aminoundecanoic acid,
or mixtures composed of c1) bis c5),
and
D) from 0.01 to 4% by weight, based on the amount of polyester after stage iii, of at least one component selected from the group d1) to d4)
d1) of a di- or oligofunctional isoscyanate and/or isocyanurate,
d2) of a di- or oligofunctional peroxide,
d3) of a di- or oligofunctional epoxide,
d4) of a di- or oligofunctional oxazoline, oxazine, caprolactam, and/or carbodiimide;
E) from 0 to 10% by weight, based on the amount of polyester after stage iii of a component selected from the group e1) to e3)
e1) of a lubricant, such as erucamide or a stearate,
e2) of a nucleating agent, such as calcium carbonate, polyethylene terephthalate, or polybutylene terephthalate,
e3) of an aliphatic polyester selected from the group consisting of: polylactic acid, polycaprolactone, polyhydroxyalkanoate.

3. The process according to claim 1, where the biodegradable polyester comprises, as aliphatic dicarboxylic acid (component a1)), succinic acid, adipic acid, or sebacic acid, esters thereof, or a mixture of these;
as aromatic dicarboxylic acid (component a2)), terephthalic acid or its esters;
as diol component (component B), 1,4-butanediol or 1,3-propanediol,
as component b2) glycerol, pentaerythritol, trimethylolpropane, and,
as component d1), hexamethylene diisocyanate.

4. The process according to claims 1 to 3, where the esterification/transesterification (stage i)) uses a hydrocyclone with attached heat exchange, and stage i), ii), and iii)) is carried out in The pretence of a titanium catalyst.

5. The process according to claims 1 to 4, where stage ii) is carried out in a tower reactor, and the product stream is conducted concurrently by way of a falling-film cascade, and the reaction vapors are removed in situ from the reaction mixture.

6. The process according to claim 5, where, in stage ii), the transesterification product or esterification product is precondensed to an intrinsic viscosity of from 25 to 55 cm³/g to DIN 53728.

7. The process according to any of claims 1 to 6, where, between stage ii) and iii), from 0.001 to 0.1% by weight of a deactivating phosphorus compound, or from 0.001 to 1.5% by weight of a color-stabilizing or activating phosphorus compound, is added to the product stream.

8. The process according to any of claims 1 to 6, where, at the start of, during, or at the send of stage iii, or in an upstream step iva of the chain-extension process ivb, from 0.01 to 2.0% by weight, based on the respective polymer composition, of an acid scavenger selected from the group of a di- or oligofunctional epoxide (d3), oxazoline, oxazine, caprolactam, and/or carbodiimide (d4) is added.

9. The process according to any of claims 1 to 8, where stage iii)) is carried out in a rotating-dusk reactor or cage reactor.

10. The process according to any of claims 1 to 9, where, after stage iii)), from 0.05 to 2.0% by weight, based on the polymer composition after stage iii, of a lubricant e1 is added.

11. The process according to any of claims 1 to 9, where, after stage iii), from 0.05 to 5.0% by weight, based on the polymer composition after stage iii), of a nucleating agent e2 is added.

12. The process according to any of claims 1 to 9, where, after stage iii)), from 0.05 to 15.0% by weight, based a on the polymer e3 composition after stage iii, of a compatibilizer e3 is added.

13. The process according to any of claims 1 to 12, where stage iv) is carried out in an extruder, List reactor, or static mixer.

14. The process according to claim 13, where, in stage iv), hexamethylene diisocyanate (component d1) is used as chain extender.

15. A biodegradable polyester based on aliphatic and aromatic dicarboxylic acids and on aliphatic dihydroxy compounds, obtainable by a process according to claim 6.

16. A biodegradable polyester based on aliphatic and aromatic dicarboxylic acids and on aliphatic dihydroxy compounds, obtainable by a process according to claim 6 and by a chain-extension process according to claim 14.

17. A biodegradable polyester based on aliphatic and aromatic dicarboxylic acids and on aliphatic dihydroxy compounds, obtainable by a process according to claim 11.

18. A biodegradable polyester based on aliphatic and aromatic dicarboxylic acids and on aliphatic dihydroxy compounds, obtainable by a process according to claim 12.

19. A biodegradable polyester composed of:
A) an acid component made of
a1) from 35 to 60 mol% of at least one aliphatic dicarboxylic acid or ester thereof, or a mixture thereof, selected from the group consisting of: succinic acid, adipic acid, and sebacic acid;
a2) from 65 to 40 mol% of terephthalic acid or ester thereof, or a mixture thereof,
where the molar percentage of components a1) and a2) give a total of 100%, and
B) a diol component (by) selected from the group consisting of: 1,4-butanediol or 1,3-propanediol, or a mixture thereof;
b2) from 0.05 to 1% by weight, based on components A and B, of glycerol,
D) a component
d1) from 0.1 to 2% by weight, based on components A and B, of hexamethylene diisocyanate;
and with an acid number, measured to DIN EN 12634, which is smaller than 1.0 mg KOH/g, and with an MVR to ISO 1133 which is smaller than 6 cm³/10 min (190°C, 2.16 kg weight).

20. A biodegradable polyester mixture comprising
i) from 5 to 95% by weight of a polyester according to claim 19;
ii) from 95 to 5% by weight of at least one or more components selected from the group consisting of aliphatic polyester, polycaprolactone, starch, cellulose, polyhydroxyalkanoate, polyglycolic acid, and polylactic acid.

21. The use of polyesters according to claim 18 for producing biodegradable polymer mixtures.

## Revendications

1. Procédé pour la production continue d'un polyester biologiquement dégradable à base d'acides dicarboxyliques aliphatiques ou aliphatiques et aromatiques et de composés dihydroxylés aliphatiques, dans lequel
on mélange en une pâte un mélange des composés dihydroxylés aliphatiques, des acides dicarboxyliques aliphatiques et aromatiques et éventuellement d'autre comonomères (composant C), sans addition d'un catalyseur, ou bien on introduit les esters liquides des acides dicarboxyliques et le composé dihydroxylé et éventuellement d'autres comonomères, sans addition d'un catalyseur, dans lequel
i) dans une première étape on estérifie ou trans-estérifie en continu ce mélange conjointement avec la quantité totale ou une quantité partielle du catalyseur ;
ii) dans une deuxième étape on pré-condense en continu le produit d'estérification ou de transestérification obtenu selon i), jusqu'à un indice de viscosité selon DIN 53728 de 20 à 70 cm³/g ;
iii) dans une troisième étape on soumet en continu le produit pouvant être obtenu à partir de ii) à une polycondensation jusqu'à un indice de viscosité selon DIN 53728 de 60 à 170 cm³/g et
iv) dans une quatrième étape on fait réagir en continu le produit pouvant être obtenu à partir de iii), dans une réaction de polyaddition avec un prolongateur de chaîne D, jusqu'à un indice de viscosité selon DIN 53728 de 150 à 320 cm³/g.

2. Procédé selon la revendication 1, dans lequel le polyester biologiquement dégradable est constitué :
A) d'un composant acide constitué de
a1) 30 à 99 % en moles d'au moins un acide dicarboxylique aliphatique ou de ses esters ou de mélanges de ceux-ci
a2) 1 à 70 % en moles d'au moins un acide dicarboxylique aromatique ou de ses esters ou de mélanges de ceux-ci et
a3) 0 à 5 % en moles d'un composé contenant des groupes sulfonate,
la somme des pourcentages en moles des composants a1) à a3) étant égale à 100 % est
B) d'un composant diol à base
b1) de quantités au moins équimolaires, par rapport au composant A, d'un alcanediol en C₂-C₁₂ ou de mélanges de tels alcanediols et
b2) de 0 à 2 % en poids, par rapport aux composants A et b1), d'un composé contenant au moins 3 groupes fonctionnels ;
et éventuellement en outre d'un ou plusieurs composants choisis parmi
C) un composant choisi parmi
c1) au moins un composé dihydroxylé contenant des fonctions éther, de formule I
HO-[(CH₂)ₙ-O]ₘ-H (I)
dans laquelle n représente 2, 3 ou 4 et m représente un nombre entier valant de 2 à 250,
c2) au moins un acide hydroxycarboxylique de formule IIa ou IIb 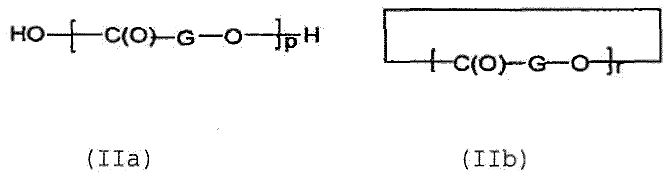 formules dans lesquelles p représente un nombre entier valant de 1 à 1500 et r représente un nombre entier valant de 1 à 4, et G représente un radical qui est choisi dans l'ensemble constitué par les groupes phénylène, -(CH₂) _{q} -, représentant un nombre entier valant de 1 à 5, -C(R)H- et -C(R)HCH₂, R représentant le groupe méthyle ou éthyle
c3) au moins un amino-alcanol en C₂-C₁₂ ou au moins un amino-cycloalcanol en C₅-C₁₀ ou des mélanges de ceux-ci
c4) au moins un diamino-alcane en C₁-C₈
c5) au moins un composé acide aminocarboxylique, choisi dans le groupe constitué par le caprolactame, l'acide 1,6-aminocaproïque, le lauryllactame, l'acide 1,12-aminolaurique et l'acide 1,11-amino-undécanoïque
ou des mélanges de c1) à c5)
et
D) 0,01 à 4 % en poids, par rapport à la quantité de polyester après l'étape iii, d'au moins un composant choisi dans le groupe d1) à d4)
d1) d'un isocyanate et/ou isocyanurate di- ou oligofonctionnel,
d2) d'un peroxyde di- ou oligofonctionnel,
d3) d'un époxyde di- ou oligofonctionnel,
d4) d'une oxazoline, d'une oxazine, d'un caprolactame et/ou d'un carbodiimide, di- ou oligofonctionnels ;
E) 0 à 10 % en poids, par rapport à la quantité de polyester après l'étape iii, d'un composant choisi dans le groupe e1) à e3)
e1) d'un lubrifiant tel que l'érucamide ou un stéarate,
e2) d'un agent de nucléation tel que le carbonate de calcium, le poly(éthylène-téréphtalate) ou le poly(butylène-téréphtalate),
e3) d'un polyester aliphatique choisi dans le groupe constitué par : le poly(acide lactique), la polycaprolactone, un polyhydroxyalcanoate.

3. Procédé selon la revendication 1, **caractérisé en ce que** le polyester biologiquement dégradable contient
en tant qu'acide dicarboxylique aliphatique (composant a1)) l'acide succinique, l'acide adipique ou l'acide sébacique, leurs esters ou des mélanges de ceux-ci ;
en tant qu'acide dicarboxylique aromatique (composant a2)) l'acide téréphtalique ou ses esters ;
en tant que composant diol (composant B) le 1,4-butanediol ou le 1,3-propanediol,
en tant que composant b2) le glycérol, le pentaérythritol, le triméthylpropane et
en tant que composant d1) l'hexaméthylène-diisocyanate.

4. Procédé selon les revendications 1 à 3, dans lequel on effectue l'estérification/la transestérification (étape i)) dans un système sous forme d'un hydrocyclone avec échangeur thermique annexé et les étapes i), ii) et iii) en présence d'un catalyseur au titane.

5. Procédé selon les revendications 1 à 4, dans lequel on effectue l'étape ii) dans un réacteur en forme de tour et on envoie le courant de produit en co-courant sur une cascade de films descendants et on sépare du mélange réactionnel les vapeurs de réaction in situ.

6. Procédé selon la revendication 5, dans lequel le produit d'estérification ou de transestérification est pré-condensé dans l'étape ii) jusqu'à un indice de viscosité selon DIN 53728 de 25 à 55 cm³/g.

7. Procédé selon l'une quelconque des revendications 1 à 6, dans lequel entre l'étape ii) et l'étape iii) on ajoute au courant de produit 0,001 à 0,1 % en poids d'un composé phosphoré inactivateur ou 0,001 à 1,5 % en poids d'un composé phosphoré activant ou stabilisant la couleur.

8. Procédé selon l'une quelconque des revendications 1 à 6, dans lequel au début, au cours ou à la fin de i'étape iii ou dans une étape iva précédente de l'extension de chaîne ivb on ajoute 0,01 à 2,0 % en poids, par rapport à la masse de polymère respective, d'un capteur d'acide choisi dans le groupe constitué par un époxyde di- ou oligofonctionnel (d3), une oxazoline, une oxazine, un caprolactame et/ou un carbodiimide (d4).

9. Procédé selon l'une quelconque des revendications 1 à 8, dans lequel on effectue l'étape iii) dans un réacteur à disque rotatif ou un réacteur à cage.

10. Procédé selon l'une quelconque des revendications 1 à 9, dans lequel après l'étape iii) on ajoute 0,05 à 2,0 % en poids, par rapport à la masse de polymère après l'étape iii, d'un lubrifiant e1.

11. Procédé selon l'une quelconque des revendications 1 à 9, dans lequel après l'étape iii) on ajoute 0,05 à 5,0 % en poids, par rapport à la masse de polymère après l'étape iii, d'un agent de nucléation e2.

12. Procédé selon l'une quelconque des revendications 1 à 9, dans lequel après l'étape iii) on ajoute 0,05 à 15,0 % en poids, par rapport à la masse de polymère après l'étape iii, d'un inducteur de compatibilité e3.

13. Procédé selon l'une quelconque des revendications 1 à 12, dans lequel on effectue l'étape iv) dans une extrudeuse, un réacteur List ou des mélangeurs statiques.

14. Procédé selon la revendication 13, dans lequel on utilise comme prolongateur de chaîne dans l'étape iv) l'hexaméthylène-diisocyanate (composant d1).

15. Polyester biologiquement dégradable à base d'acides dicarboxyliques aliphatiques et aromatiques et de composés dihydroxylés aliphatiques, pouvant être obtenu conformément à un procédé selon la revendication 6.

16. Polyester biologiquement dégradable à base d'acides dicarboxyliques aliphatiques et aromatiques et de composés dihydroxylés aliphatiques, pouvant être obtenu conformément à un Procédé selon la revendication 6 et à une extension de chaîne selon la revendication 14.

17. Polyester biologiquement dégradable à base d'acides dicarboxyliques aliphatiques et aromatiques et de composés dihydroxylés aliphatiques, pouvant être obtenu conformément à un Procédé selon la revendication 11.

18. Polyester biologiquement dégradable à base d'acides dicarboxyliques aliphatiques et aromatiques et de composés dihydroxylés aliphatiques, pouvant être obtenu conformément à un procédé selon la revendication 12.

19. Polyesters biologiquement dégradable constitué :
A) d'un composant acide constitué de
a1) 35 à 60 % en moles d'au moins un acide dicarboxylique aliphatique ou de ses esters ou de mélanges de ceux-ci, choisi dans le groupe constitué par : l'acide succinique, l'acide adipique et l'acide sébacique ;
a2) 65 à 40 % en moles d'ester téréphtalique ou de ses esters ou de mélanges de ceux-ci et
la somme des pourcentage en moles des composants a1) et a2) étant égale à 100 % et
B) d'un composant diol (b1) choisi dans le groupe constitué par : le 1,4-butanediol et le 1,3-propanediol ou des mélanges de ceux-ci ;
b2) 0,05 à 1 % en poids, par rapport aux composants A et B, de glycérol,
D) d'un composant
d1) 0,1 à 2 % en poids, par rapport aux composants A et B, d'hexaméthylène-diisocyanate ;
et ayant un indice d'acide, mesuré selon DIN EN 12634, inférieur à 1,0 mg de KOH/g et un MVR selon ISO 1133 inférieur à 6 cm³/10 min (190 °C, poids de 2,16 kg).

20. composition de polyester biologiquement dégradable, contenant
i) 5 à 95 % en poids d'un polyester selon la revendication 19 ;
ii) 95 à 5 % en poids d'au moins un ou plusieurs composants choisis dans le groupe constitué par un polyester aliphatique, la polycaprolactone, l'amidon, la cellulose, un polyhydroxyalcanoate, le poly(acide glycolique) et le poly(acide lactique).

21. Utilisation de Polyesters selon la revendication 18, pour la préparation de compositions de polymères biologiquement dégradable.
